(19) Europäisches Patentamt / European Patent Office / Office européen des brevets

(11) **EP 2 112 663 A2**

(12) **EUROPEAN PATENT APPLICATION**

(43) Date of publication:
**28.10.2009 Bulletin 2009/44**

(51) Int Cl.:
*G11B 27/034* (2006.01)   *H04N 7/26* (2006.01)
*H04N 7/50* (2006.01)

(21) Application number: **09156815.4**

(22) Date of filing: **31.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **22.04.2008 JP 2008111760**

(71) Applicant: **Sony Corporation**
**Tokyo 108-0075 (JP)**

(72) Inventor: **Mizuno, Hiroshi**
**TOKYO 108-0075 (JP)**

(74) Representative: **Beder, Jens**
**Mitscherlich & Partner**
**Patent-und Rechtsanwälte**
**Sonnenstraße 33**
**80331 München (DE)**

(54) **Information processing apparatus and information processing method**

(57)    In an information processing apparatus, an encoded data joiner joins divided and encoded data generated as a result of division-encoding target data that has been divided into a plurality of intervals at a predetermined number of division points. A decoder then decompresses the data generated by the encoded data joiner, and a re-encoder re-encodes the decoded data generated by the decoder. The re-encoder re-encodes the decoded data over just the minimum number of division point intervals containing data portions to be altered, thereby efficiently re-compressing data that has been altered.

FIG. 8

EP 2 112 663 A2

**Description**

BACKGROUND OF THE INVENTION

1. Field of the Invention

The present invention relates to an information processing apparatus and an information processing method. More particularly, the present invention relates to an information processing apparatus and an information processing method whereby encoding efficiency is improved.

2. Description of the Related Art

In the related art, authoring apparatus is used at production facilities for producing recording media such as optical discs. Such an authoring apparatus respectively encodes (more specifically, performs compression processing with respect to) information such as video data and audio data using a standard such as MPEG (Moving Picture Experts Group), for example. Subsequently, the authoring apparatus multiplexes the respective sets of encoded data resulting from the respective encoding processes, and then records the multiplexed stream onto one or more recording media.

An authoring apparatus such as the above respectively allocates a number of bits recordable onto a recording medium to the video data, audio data, and other information. The authoring apparatus additionally encodes the respective sets of data such that each set of data is contained in the number of bits allocated thereto.

One video data encoding method involves what is referred to as two-pass encoding (see Japanese Unexamined Patent Application Publication No. 2000-278042, for example). Two-pass encoding is a method made up of a trial (i.e., preliminary) encoding process, followed by an actual encoding process.

Two-pass encoding will now be summarized. In the following, the trial encoding process is referred to as the first-pass encoding process, while the actual encoding process is referred to as the second-pass encoding process.

An encoder first performs first-pass encoding with respect to a series of video data to be encoded, and wherein encoding parameters are held constant. At this point, various data (such as the number of generated bits, for example) obtained during the first-pass encoding process is sequentially detected on a per-frame basis.

On the basis of the per-frame numbers of generated bits detected as described above, the encoder respectively allocates bits to each frame constituting the video data. In other words, the encoder sets a per-frame target bit number to be used during the second-pass encoding process.

Furthermore, the encoder assigns picture types to be used during the second-pass encoding process. Picture type assignment herein refers to assigning an encoding type to each frame.

More specifically, MPEG involves encoding each frame using one of the following encoding types: I picture (Intra-picture), P picture (Predictive picture), and B picture (Bidirectionally predictive picture). I picture refers to an encoding type wherein the image data for a single frame is encoded in a self-contained manner, without using image data from other frames. In other words, I picture refers to an encoding type involving encoding within the frame. On the other hand, P picture and B picture principally refer to encoding types involving encoding among several frames. In basic terms, P picture refers to an encoding type wherein the difference (i.e., the prediction error) between the image data for a single frame and the image data for an I picture or P picture predictive frame chronologically preceding the first frame is evaluated and then encoded. Also in basic terms, B picture refers to an encoding type wherein the difference (i.e., the prediction error) between the image data for a single frame and the image data for an I picture or P picture predictive frame chronologically preceding or succeeding the first frame is evaluated and then encoded.

Consequently, picture type allocation refers to respectively allocating to each frame one of the three encoding types: I picture, P picture, or B picture. Stated differently, it can be said that picture type allocation is equivalent to defining the structure of each GOP (Group of Pictures).

In this way, after performing first-pass encoding, the process results are used to set target bit numbers and allocate picture types on a per-frame basis.

Subsequently, encoding parameters containing at least the per-frame picture types and target bit numbers are configured, and then second-pass encoding is executed in accordance with the encoding parameters.

In other words, the encoder performs second-pass encoding with respect to the same video data as that of the first pass, and then outputs the resulting encoded video data. More specifically, the encoder successively encodes the data from each frame constituting the video data such that the resulting data corresponds to the allocated picture type and has the target number of bits. As a result, a bit stream made up of a continuous arrangement of I, B, or P picture encoded frame data is output from the encoder as encoded video data.

Other video data encoding methods are disclosed in Japanese Unexamined Patent Application Publication No. 2002-326864 and Japanese Unexamined Patent Application Publication No. 2001-53570, for example.

The method disclosed in JP-A-2002-326864 involves executing the following processes 1 to 3, in that order.

Process 1 involves performing first-pass encoding over all intervals (i.e., segments) of given video data. Process 2 involves performing second-pass encoding over specific intervals representing only a portion of the video data. Process 3 involves replacing the data in the specific intervals of the first-pass encoded video data with the corresponding second-pass encoded video data, and then outputting the resulting data as the final encoded video data.

The method disclosed in JP-A-2001-53570 involves the following. Allocated bits in first-pass encoded video data are reduced for intervals wherein decreasing the bit number is not a problem. Target bit numbers are then allocated such that a number of bits equivalent to the above bit reduction is allocated to other, problematic intervals. Second-pass encoding is then performed in accordance with the above target bit numbers.

Encoding processes such as the above involve a heavy processing load for bit number calculations and other computation. For this reason, if data is to be encoded using MPEG-4 AVC (H.264/AVC), one of the codecs implemented in Blu-ray™ discs, then the encoding process time increases due to the heavier computational processing load compared to that of the MPEG-2 codec implemented in DVDs (Digital Versatile Discs).

One method of compensating for the above involves distributing the encoding processes and processing in parallel to reduce the encoding time. For example, a plurality of similarly configured encoding PCs (Personal Computers) may be prepared, and then the information to be computed may be divided into a number of equal portions according to the number of encoding PCs and executed in parallel. In so doing, H.264/AVC encoding is efficiently processed, and the encoding time is decreased.

SUMMARY OF THE INVENTION

However, in authoring apparatus of the related art conducting the distributed encoding processing described above, little consideration is given for altering the data subject to compression. Thus, if it becomes desirable to correct, modify, or otherwise alter part of the video data after that video data has been compressed, then altering the data will involve compressing all intervals thereof again.

More specifically, the entire set of video data is re-captured and the newly-acquired video data to be encoded is then compressed over the entire range thereof, even if the locations to be corrected or modified represent just a portion of the video data.

In such authoring apparatus of the related art, processing times associated with encoding become lengthy, superfluous encoding processing is produced, and efficiency is extremely poor.

Being devised in light of the foregoing circumstances, embodiments of the present invention provide an information processing apparatus and an information processing method whereby video data can be efficiently compressed.

An information processing apparatus in accordance with an embodiment of the present invention is provided with: a encoded data joiner configured to join divided and encoded data generated as a result of division-encoding target data that has been divided into a plurality of intervals at a predetermined number of division points; a decoder configured to decompress the data generated by the encoded data joiner; and a re-encoder configured to re-encode the decoded data generated by the decoder. The re-encoder herein re-encodes the decoded data over the minimum number of division point intervals containing data portions to be altered.

An information processing method in accordance with another embodiment of the present invention includes the steps of: joining divided and encoded data that has been generated as a result of division-encoding target data that has been divided into a plurality of intervals at a predetermined number of division points; decoding the data generated in the encoded data joining step; and re-encoding the decoded data generated in the decoding step. In the re-encoding step herein, the decoded data is re-encoded over the minimum number of division point intervals containing data portions to be altered.

According to an embodiment of the present invention, only portions containing data to be corrected or modified are compressed and substituted, thereby efficiently conducting encoding processing without re-encoding the entire set of video data.

BRIEF DESCRIPTION OF THE DRAWINGS

Fig. 1 is a block diagram illustrating an exemplary configuration of a studio authoring apparatus to which an information processing apparatus in accordance with an embodiment of the present invention has been applied;
Fig. 2 is a flowchart illustrating exemplary processing executed by a studio authoring apparatus;
Fig. 3 is a block diagram illustrating an exemplary configuration of a plant authoring apparatus;
Fig. 4 is a flowchart illustrating exemplary processing executed by a plant authoring apparatus;
Fig. 5 is a block diagram illustrating an exemplary configuration of video data capture apparatus to which an information processing apparatus in accordance with an embodiment of the present invention has been applied;

Fig. 6 is a schematic diagram for explaining division point candidates, division points, and division processing intervals in video data to be encoded;

Fig. 7 is a schematic diagram for explaining video data processed for 2:3 pulldown;

Fig. 8 is a block diagram illustrating an exemplary configuration of a video signal processing apparatus included in an authoring apparatus;

Fig. 9 is a block diagram illustrating an exemplary configuration of a video signal distributed processing apparatus in the case where video data is encoded in a distributed manner;

Fig. 10 is a flowchart illustrating exemplary processing executed by an information processing apparatus in accordance with an embodiment of the present invention;

Fig. 11A is a diagram for explaining encoding units for re-encoding and showing the relationship between RAPs and GOPs;

Fig. 11B is a diagram for explaining encoding units for re-encoding in the case where RAP intervals are taken to be the re-encoding intervals;

Fig. 12 is a diagram for explaining encoding units for re-encoding in the case where the shortest intervals between distributed encoding points are taken to be the re-encoding intervals;

Fig. 13 is a diagram for explaining the determination of re-encoding intervals containing the parts of the video data to be corrected or modified; and

Fig. 14 is a block diagram illustrating an exemplary configuration of an information processing apparatus in accordance with an embodiment of the present invention.

## DESCRIPTION OF THE PREFERRED EMBODIMENTS

Hereinafter, specific embodiments of the present invention will be described with reference to the accompanying drawings. Herein, the general configuration of an authoring apparatus will be first explained, followed by a description of an information processing system that encodes video data in a parallel manner, including a description of the characteristic encoding pre-process therein.

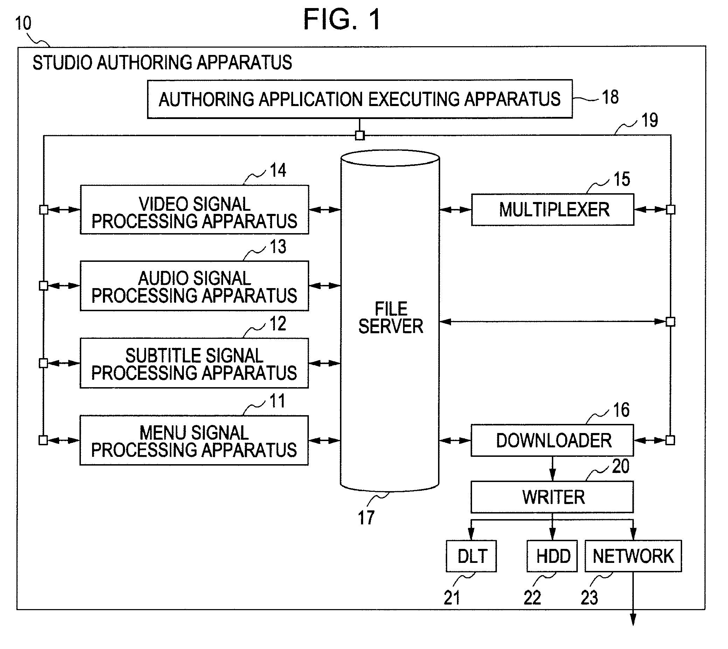

Fig. 1 illustrates an exemplary configuration of an authoring apparatus installed at a studio (hereinafter referred to as a studio authoring apparatus), and to which an information processing apparatus in accordance with an embodiment of the present invention has been applied.

The studio authoring apparatus 10 is provided with components from the menu signal processing apparatus 11 to the authoring application executing apparatus 18, all being mutually connected via a network 19. In addition, connected to the downloader 16 via the writer 20 are a DLT (Digital Linear Tape) 21, an HDD (Hard Disk Drive) 22, and a network 23.

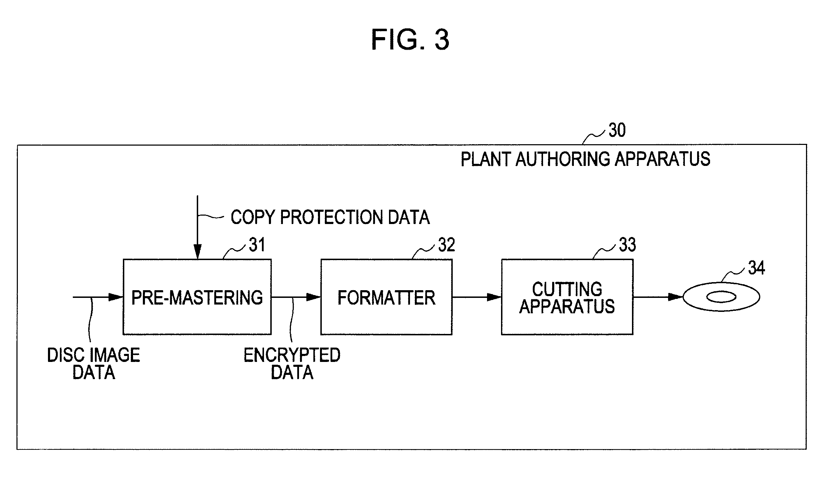

The studio authoring apparatus 10 generates a multiplexed stream to be recorded onto an optical disc (not shown in the drawings) in the form of a file. The file is stored in at least one of the DLT 21, the HDD 22, and network 23. Herein, the storing of data on the network 23 refers to transferring the data via the network 23 to another apparatus connected thereto, and then causing the data to be retained (i.e., stored) in the other apparatus. The other apparatus may be, for example, the plant authoring apparatus 30 shown in Fig. 3 and hereinafter described.

In the studio authoring apparatus 10, the menu signal processing apparatus 11 switches operation as a result of being controlled by the authoring application executing apparatus 18. For example, the menu signal processing apparatus 11 may be controlled to encode video data for a menu screen supplied from a video tape recorder or similar component (not shown in the drawings), and then store the resulting encoded video data in the file server 17.

The subtitle signal processing apparatus 12 also switches operation as a result of being controlled by the authoring application executing apparatus 18. For example, the subtitle signal processing apparatus 12 may be controlled to encode subtitles or other video data supplied from a video tape recorder or similar component (not shown in the drawings), and then store the resulting encoded video data in the file server 17.

The audio signal processing apparatus 13 also switches operation as a result of being controlled by the authoring application executing apparatus 18. For example, the audio signal processing apparatus 13 may encode audio data supplied from a video tape recorder or similar component (not shown in the drawings), and then store the resulting encoded audio data in the file server 17.

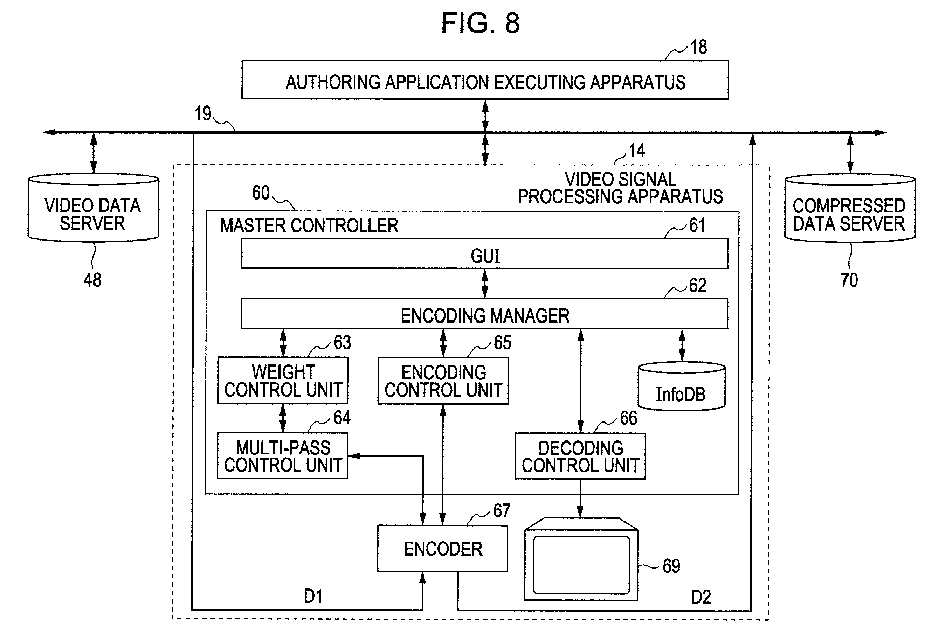

The video signal processing apparatus 14 is controlled by the authoring application executing apparatus 18 to encode the video data constituting the primary data among the edited content (i.e., data) to be recorded onto an optical disc (not shown in the drawings), and then store the resulting encoded video data in the file server 17. An exemplary configuration of the video signal processing apparatus 14 will be later described in detail and with reference to Fig. 8.

The multiplexer 15 is controlled by the authoring application executing apparatus 18 to respectively multiplex the above encoded audio data and encoded video data being stored in the file server 17, and then generate a file from the resulting multiplexed stream. Hereinafter, such files will be referred to as multiplexed stream files.

The multiplexed stream file generated by the multiplexer 15 is then supplied to the downloader 16 via the network 19. The downloader 16 stores the multiplexed stream file in at least one of the DLT 21, the HDD 22, and the network 23 via the writer 20.

The multiplexed stream file thus stored in at least one of the DLT 21, the HDD 22, and the network 23 is then supplied as disc image data to the plant authoring apparatus 30 shown in Fig. 3 and hereinafter described, for example. The plant authoring apparatus 30 then causes the multiplexed stream file to be recorded onto an optical disc, for example. In other words, a master disc 34 is created by the plant authoring apparatus 30, having a multiplexed stream file recorded thereon. Further description of the plant authoring apparatus 30 will be described later.

The file server 17 may be, for example, the combination of a computer having network administration functions as well as a high-speed access disk array. As described above, the file server 17 is supplied with and stores encoded video data and encoded audio data respectively supplied from the menu signal processing apparatus 11, the subtitle signal processing apparatus 12, the audio signal processing apparatus 13, and the video signal processing apparatus 14 via the network 19. Operating in response to a request from the multiplexer 15 or other component, the file server 17 may also output encoded video data or encoded audio data stored therein to the multiplexer 15 or other component.

The authoring application executing apparatus 18 may be realized by means of a computer able to execute authoring application software, for example. Authoring application software refers to software for controlling the general operation of the studio authoring apparatus 10. In other words, the authoring application executing apparatus 18 may, for example, operate in accordance with various parameters set by an operator, notify various apparatus of content to be processed by issuing an edit list to components such as the video signal processing apparatus 14 and the downloader 16, and then control the operation of the respective apparatus. In addition, the authoring application executing apparatus 18 may calculate amounts of data to be allocated to audio data and video data from among the total amount of data that can be recorded onto the optical disc (not shown in the drawings). The authoring application executing apparatus 18 may then notify various apparatus of the calculated data amounts by means of an encoding file.

In addition, the authoring application executing apparatus 18 also issues a notification to the video signal processing apparatus 14 containing video signal chapter information that has been set by the operator. Herein, a chapter refers to a frame that has forcibly encoded using intra-frame encoding processing. With an optical disc apparatus, a user is then able to jump tracks and view recorded content using the chapters as markers.

Furthermore, the authoring application executing apparatus 18 also issues a notification to the video signal processing apparatus 14 containing video signal information such as the maximum GOP (Group of Pictures) picture number and the encoding sequence in each GOP. The authoring application executing apparatus 18 also issues a notification to the video signal processing apparatus 14 containing information regarding content for multi-angle processing. Multi-angle processing refers to recording a plurality of video material onto an optical disc in a time division multiplexed manner. Such processing thus enables a user to view content differently upon selection. For example, the user may thus be able to view a scene of a moving train from different filming positions.

In this way, the authoring application executing apparatus 18 issues the above information as well as other encoding-related information to the video signal processing apparatus 14 by means of an encoding file. Hereinafter, the respective apparatus from the menu signal processing apparatus 11 to the downloader 16 that are controlled by the authoring application executing apparatus 18 will be referred to as the internal apparatus of the studio authoring apparatus 10.

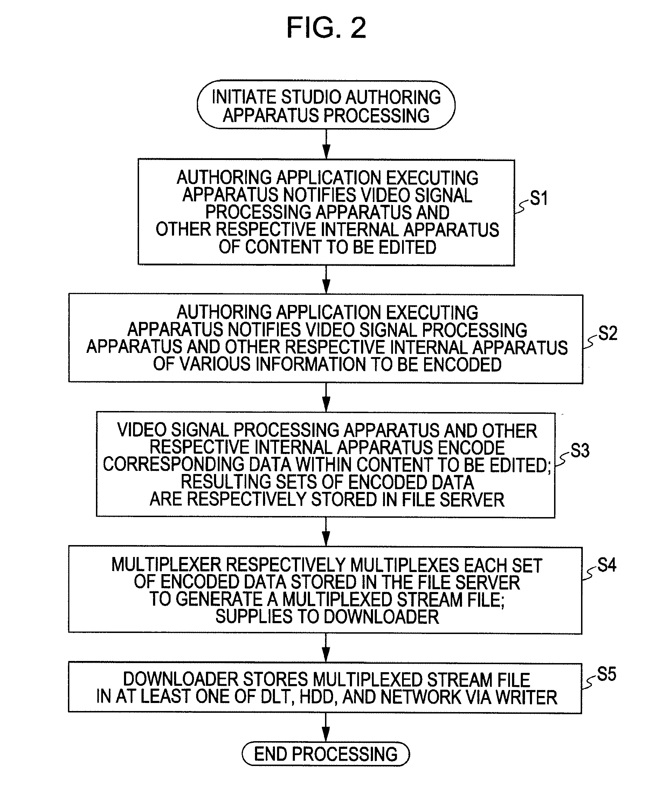

Exemplary processing executed by the studio authoring apparatus 10 will now be described with reference to the flowchart shown in Fig. 2.

In step S1, the authoring application executing apparatus 18 issues an edit list to the video signal processing apparatus 14 and other respective internal apparatus in accordance with operation instructions issued by the operator. In so doing, the authoring application executing apparatus 18 issues the content to be edited to the video signal processing apparatus 14 and other respective internal apparatus.

The content to be edited herein refers to material (i.e., data) that at least includes the video data to be processed by the video signal processing apparatus 14, for example. Where appropriate, the content to be edited may also include other data of arbitrary size and type. Such other data may include audio data to be processed by the audio signal processing apparatus 13, video data to be processed by the subtitle signal processing apparatus 12, and video data to be processed by the menu signal processing apparatus 11.

In step S2, the authoring application executing apparatus 18 issues various encoding-related information to the video signal processing apparatus 14 and other respective internal apparatus.

At this point, the various information issued in the process in step S2 may, for example, be collectively contained in a predetermined file, and then the file may be issued to the video signal processing apparatus 14 and other respective internal apparatus. Hereinafter, such a file will be referred to as an encoding file.

More specifically, in step S2, the authoring application executing apparatus 18 may acquire a value for the total data size of data that can be recorded onto the optical disc or other medium onto which the content to be edited will be subsequently recorded. On the basis of the value of the data size, the authoring application executing apparatus 18 may then respectively calculate the data sizes to be allocated to each set of data constituting the content to be edited.

Subsequently, the authoring application executing apparatus 18 may respectively include each calculated data size in the encoding file, and then respectively issue the file to relevant internal apparatus among the internal apparatus of the studio authoring apparatus 10. For example, the authoring application executing apparatus 18 may include, in the encoding file, the data size to be allocated to the video data that will be processed by the video signal processing apparatus 14 (i.e., the video data in the content to be edited, excluding menu and titling video data), and then issue the encoding file to the video signal processing apparatus 14. (Hereinafter, the above data size will be referred to as the data size allocatable to video data.)

As another example, in step S2, the authoring application executing apparatus 18 may also include, in the encoding file, chapter time information (hereinafter referred to as access (chapter) points) set by the operator with respect to the video data in the content to be edited, excluding menu and titling video data, and then issue the encoding file to the video signal processing apparatus 14. In so doing, a user using an apparatus capable of handling optical discs or similar media is able to jump tracks and view recorded content using the chapters as markers.

As another example, in step S2, the authoring application executing apparatus 18 may also include, in the encoding file, the maximum GOP display picture number (such as 15 pictures, for example) and encoding sequences for each GOP with respect to the video data in the content to be edited, excluding menu and titling video data. The authoring application executing apparatus 18 may then issue the encoding file to the video signal processing apparatus 14.

Furthermore, in step S2, the authoring application executing apparatus 18 may also include, for example, information regarding content for multi-angle processing in the encoding file as appropriate, and then issue the encoding file to the video signal processing apparatus 14.

As another example, in step S2, the authoring application executing apparatus 18 may also include information such as the optical disc capacity and VTR start and stop times in the encoding file as appropriate, and then issue the encoding file to the video signal processing apparatus 14.

As a result of such processing in step S2, an encoding file containing various encoding-related information is individually supplied to respective internal apparatus, and then the process proceeds to step S3.

In step S3, the video signal processing apparatus 14 and other respective internal apparatus encode the content to be edited on the basis of the various information included in the encoding file, and then respectively store the encoded data resulting from each apparatus in the file server 17.

In step S4, the multiplexer 15 multiplexes the respective sets of encoded data that were stored in the file server 17 in step S3, thereby generating a multiplexed stream file. The multiplexer 15 then supplies the multiplexed stream file to the downloader 16.

In step S5, the downloader 16 causes the multiplexed stream file to be stored in at least one of the DLT 21, the HDD 22, and network 23 via the writer 20.

Having conducted the above, the processing executed by the studio authoring apparatus 10 is then terminated.

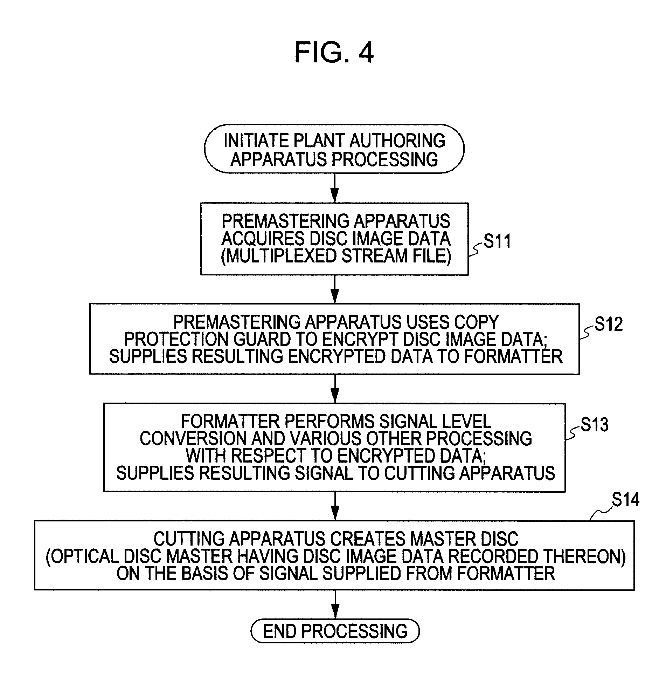

A plant authoring apparatus will now be described with reference to Fig. 3. Fig. 3 is a block diagram illustrating an exemplary configuration of an authoring apparatus installed at a plant (hereinafter referred to as a plant authoring apparatus). As shown in Fig. 3, the plant authoring apparatus 30 may include, for example, a premastering apparatus 31, a formatter 32, and a cutting apparatus 33. Hereinafter, exemplary processing executed by the plant authoring apparatus will be described with reference to the flowchart shown in Fig. 4.

In step S11, the premastering apparatus 31 acquires disc image data (i.e., a multiplexed stream file containing the encoded video data D2 shown in Fig. 8 and hereinafter described) that was output from the downloader 16 shown in Fig. 1 and supplied via the DLT 21, the HDD 22, or the network 23.

Subsequently, in step S12, the premastering apparatus 31 encrypts the acquired disc image data using externally-provided copy protection data, and then supplies the resulting encrypted data to the formatter 32.

In step S13, the formatter 32 subjects the supplied encrypted data to signal level conversion and other various processing, and then supplies the resulting signal to the cutting apparatus 33.

In step S14, the cutting apparatus 33 creates a master disc 34 (i.e., an optical disc master onto which disc image data has been recorded) on the basis of the signal supplied thereto from the formatter 32.

Having conducted the above, the processing executed by the plant authoring apparatus 30 is then terminated.

Typically, distributed encoding is implemented in order to conduct encoding processes efficiently. In distributed encoding, a plurality of encoders are prepared, and the video data is equally divided into a number of portions corresponding to the number of encoders, which then processing the video data in parallel. By means of such distributed encoding, it is possible to reduce the processing time associated with a wide variety of complex calculations, and thereby realize efficient authoring operations.

As described above, when conducting distributed encoding, video data is equally divided into a number of portions corresponding to the number of prepared encoders and then distributed thereto. In order to do so, division points in the video data are first determined, and then the video data is divided at the division points. However, it is not desirable to set division points at arbitrary locations in the video data. Instead, division points are set at locations such that image quality is unaffected. In order to determine where to set division points such that image quality is unaffected, a pre-process is executed prior to encoding, wherein a search is conducted to find division point candidates where the video data can be divided without affecting image quality.

In addition, if the video data to be encoded has been recorded with 2:3 pulldown, for example, then repeating images are included in the video data. Thus, in order to make efficient use of limited disc space, a pre-process similar to that of division point candidate detection is preferably executed, such that repeating image patterns are detected and then repeating images are culled from the video data at the time of encoding.

Meanwhile, in authoring apparatus of the related art that compress data using one or a plurality of encoding apparatus implementing highly processor-intensive image compression such as the AVC codec, the following respective processes are separately conducted: video data capture, control of video data recording apparatus during capture, and pre-process/compression processing such as video data division point candidate detection and pulldown pattern detection. Compared to codec compression apparatus capable of compressing data in real-time, such authoring apparatus of the related art have processing times that are several times (approximately three times) that of real-time.

Consequently, the information processing apparatus in accordance with the present embodiment is configured to control a VTR during video data capture, while additionally extracting characteristics from the video data being processed. More specifically, the extraction of characteristics from the video data to be encoded includes at least the detection of division point candidates. Subsequently, the extracted characteristic information is stored in a data server, and is later referenced when configuring encoding parameters, thereby enabling encoding to be efficiently executed.

Hereinafter, a configuration and exemplary processing will be described for a video data capture apparatus to which an information processing apparatus in accordance with the present embodiment has been applied, followed by a description of a method for utilizing characteristic information extracted during video data capture for encoding processing.

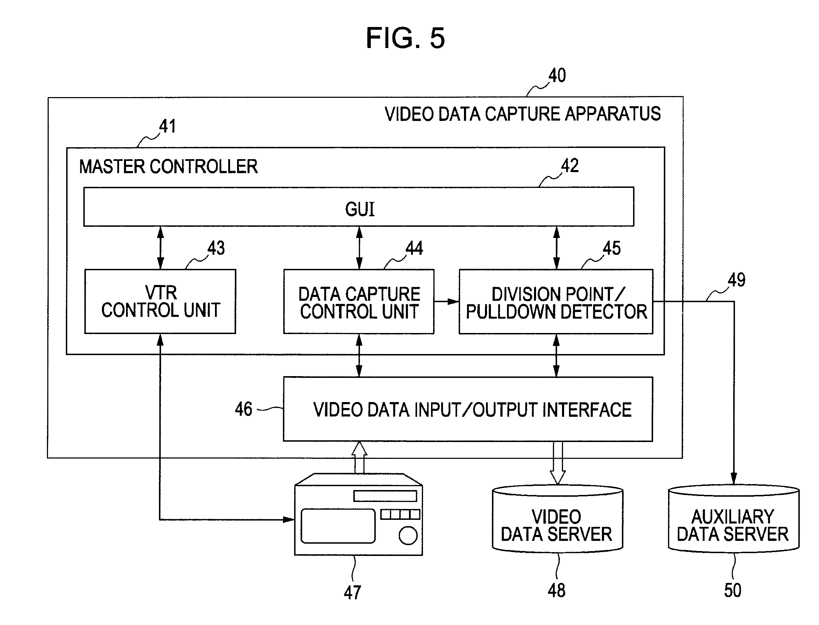

Fig. 5 is a block diagram illustrating an exemplary configuration of a video data capture apparatus. An information processing apparatus in accordance with the present embodiment is configured such that, during video data capture, video data characteristics are extracted while a playback apparatus is controlled and video data is verified. In other words, the video data capture apparatus 40 shown in Fig. 5 is controlled by the master controller 41, and on the basis of such control, the video data capture apparatus 40 captures video data via a video data input/output interface 46, the video data being transmitted from a video tape recorder (VTR) 47. Video data characteristic extraction processing (to be hereinafter described) is then executed thereon, and the video data is stored in a video data server 48. In addition, on the basis of control by the master controller 41, the video data capture apparatus 40 is also configured to record the characteristic information extracted from the video data onto an auxiliary data server 50 via a network 49. Hereinafter, the above process will be described in further detail.

The master controller 41 may be realized by means of a computer assigned to the video data capture apparatus 40, and controls overall operation of the video data capture apparatus 40.

More specifically, as shown by way of example in Fig. 5, the master controller 41 receives operational instructions from an operator (not shown in the drawings) by managing a GUI (Graphical User Interface) 42. A VTR control unit 43 controlled by the GUI 42 then controls the operation of a data capture control unit 44 and a division point/pulldown detector 45. In so doing, the master controller 41 captures video data to be encoded that is transmitted from the VTR 47, while additionally extracting video data characteristics therefrom, and then stores the video data to be encoded in the video data server 48 via the video data input/output interface 46. In addition, the master controller 41 records the characteristic information extracted from the captured video data onto the auxiliary data server 50 via the network 49.

More specifically, the GUI 42 of the master controller 41 manages the following three programs: a VTR control program of the VTR control unit 43, a data capture control program of the data capture control unit 44, and a division point/pulldown detection program of the division point/pulldown detector 45.

The VTR control unit 43 also receives operational instructions from the operator (not shown in the drawings) via the GUI 42, and then controls playback operation of the VTR 47. When time information related to the video data (i.e., start points (start time codes) and end points (end time codes)) is set by the operator via the GUI 42, the VTR control unit 43 conducts playback control operations on the basis of the time information so as to cause the VTR 47 to fast-forward or rewind video, for example. Subsequently, on the basis of the processing executed by the VTR control unit 43, video data is captured by the data capture control unit 44 via the video data input/output interface 46 and thereby acquired by the master controller 41. In this way, the data capture control unit 44 captures desired video data to be encoded via the video data input/output interface 46 and on the basis of VTR 47 playback control by the VTR control unit 43.

The division point/pulldown detector 45 conducts characteristic information extraction and detection with respect to the video data captured by the master controller 41 as described above. More specifically, the division point/pulldown detector 45 at least detects division point candidates whereby the video data can be divided during distributed encoding without affecting image quality. In addition, the division point/pulldown detector 45 may also extract other characteristic information, such as characteristics related to repeating image patterns existing within video data that has been processed for 2:3 pulldown, for example.

The video data capture apparatus included in an information processing apparatus in accordance with the present embodiment and having the above configuration specifically executes processing like the following.

The VTR control unit 43 of the master controller 41 in the video data capture apparatus 40 first controls a VTR on the basis of capture start points and end points that have been set by an operator via the GUI 42. Once the video data to be captured has been thus determined, the data capture control unit 44 captures the video data via the video data input/output interface 46.

Once the video data is captured and internally acquired by the master controller 41 by means of the VTR control unit 43 and the data capture control unit 44, the video data is transferred to the division point/pulldown detector 45, and characteristics are extracted therefrom. Meanwhile, the video data to be encoded is also output to the video data input/output interface 46 for capture only by the video data server 48, without being transferred to the division point/pulldown detector 45. Consequently, the video data transmitted to the division point/pulldown detector 45 by the data capture control unit 44 is data sent only for characteristic extraction. In so doing, delays in processing times can be avoided.

The division point/pulldown detector 45 at least detects and extracts division point candidate characteristics, whereby the video data can be divided during distributed encoding without affecting image quality. In addition to division point detection, the division point/pulldown detector 45 may also extract, in the form of characteristic information, characteristics related to repeating image patterns in the video data to be encoded. More specifically, if the video pattern to be encoded is material that has been processed for 2:3 pulldown, then the division point/pulldown detector 45 also detects the patterns whereby repeating frames appear. It should be appreciated that the repeating image patterns herein are not limited to image patterns existing in video data that has been processed for 2:3 pulldown, and also include repeating image patterns in video data that has not been processed for 2:3 pulldown.

In this way, characteristic information such as division point candidates and repeating image patterns from 2:3 pulldown, for example, are detected during video data capture. The characteristic information is then stored in the auxiliary data server 50 connected to the network 49. Meanwhile, the data to be stored in the video data server 48 is transmitted from the data capture control unit 44 separately from the data output by the division point/pulldown detector 45, and then stored in the video data server 48 via the video data input/output interface 46. Subsequently, the stored video data is encoded by the video signal processing apparatus 14 of the studio authoring apparatus 10. The details of the above encoding process will be described later.

In an information processing apparatus in accordance with the present embodiment, a distributed encoding method is implemented, whereby video data is divided into a plurality of units, which are then respectively distributed to individual encoders for compression in order to reduce the processing times associated with a wide range of encoding processes. Furthermore, the information processing apparatus is configured to detect the division points used in the above distributed processing during capture of the video data to be encoded, as described above.

In other words, during video data capture, the VTR 47 is controlled on the basis of operational input by the operator with respect to the GUI 42. At the same time, the division point/pulldown detector 45 is configured to extract, from the video data, division point candidates and repeating image patterns from 2:3 pulldown, for example.

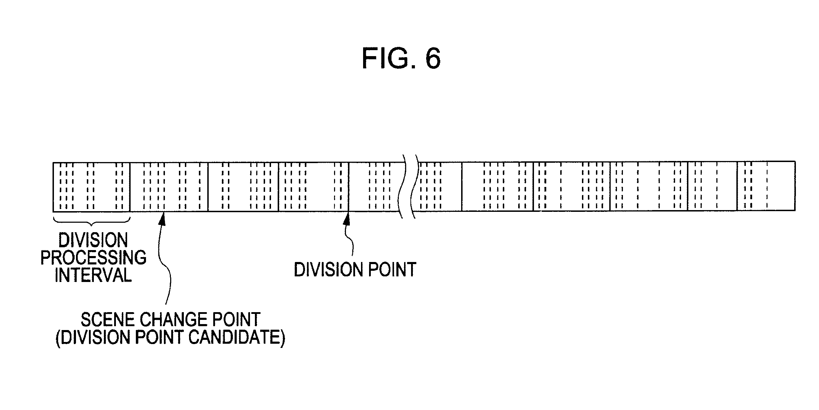

Division point candidates will now be described with reference to Fig. 6. Fig. 6 is a schematic diagram related to division point candidates and division points.

Division points are preferably not arbitrary locations in the video data. Instead, it is preferable to conduct a pre-process to distributed encoding wherein division points are determined by searching for points that do not affect image quality. Scene change points in the video data are a specific example of such division points.

Scene change points are portions denoting breaks in scenes, and wherein image quality is minimally affected even if the preceding and succeeding frames are encoded by different encoders. In addition, large changes in brightness typically occur at such scene change points. For this reason, scene changes can be easily detected by comparing the preceding scene to the succeeding scene and checking the change in brightness between the scenes.

Consequently, by designating scene change points to be division points and detecting scene changes by using the change in brightness as described above, it is possible to easily detect division point candidates whereby image quality is unaffected. In this way, division point candidates are detected in the video data between a start point and an end point by using changes in brightness.

Fig. 6 illustrates a plurality of division point candidates that were detected by designating scene change points to be division points and then using changes in brightness as described above. In distributed encoding, the division point candidates are referenced, and video data is divided at the division points at approximately equal intervals in accordance with the total number of encoders provided over a network. In addition, as shown in Fig. 6, the data between respective division points becomes a division processing interval to be processed by a respective encoder connected via the network.

The extraction of characteristics related to repeating image patterns in video data to be encoded will now be described. More specifically, the detection of pulldown patterns (i.e., repeating patterns) in video data processed for 2:3 pulldown will be described by way of example.

An information processing apparatus in accordance with the present embodiment is configured such that, if repeating image patterns exist in the video data to be encoded, then the information processing apparatus extracts such repeating image patterns in the form of characteristic information in addition to detecting the division points described above. For example, if the video data to be encoded has been processed for 2:3 pulldown, then the information processing apparatus detects and extracts repeating patterns from 2:3 pulldown. Hereinafter, repeating patterns in video data that has been processed for 2:3 pulldown will be described as an example of repeating image patterns found in video data to be encoded.

The 2:3 pulldown processing herein refers to processing whereby identical field images are periodically repeated in order to convert data made up of 24 frames per second into an NTSC television video signal made up of 30 frames per second. Although the phase of the pulldown patterns may be determined when converting to NTSC format video data, in many cases the patterns are converted according to a regular rule. A single frame of video data is made up of two fields, the first field thereof being herein referred to as the top field, and the second field thereof being herein referred to as the bottom field.

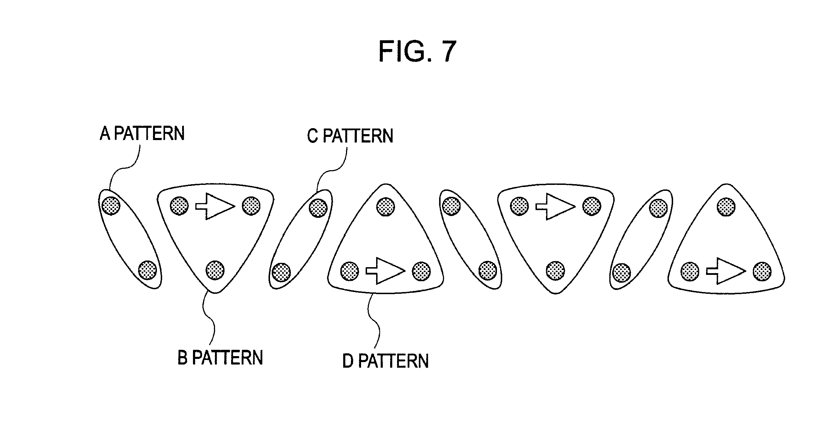

Fig. 7 is a schematic diagram of video data that has been processed for 2:3 pulldown. If video data is encoded without regard for pulldown data, then the field data duplicated in the B pattern and the D pattern shown in Fig. 7 (i.e., the repeating image patterns) are also encoded, resulting in significant losses to available disc space. In order to efficiently utilize limited disc space, it is desirable to encode video data after having culled the copied fields therefrom. For this reason, pulldown pattern characteristics are detected for encoding, and the characteristic information is then stored so as to be usable during encoding.

As described above, an information processing apparatus in accordance with the present embodiment is configured to detect pulldown patterns at the time of video data capture. Subsequently, detected pulldown pattern information is stored in the auxiliary data server 50. In so doing, repeating fields are culled from the video data on the basis of the pattern information at the time of encoding, thereby increasing the video data compression efficiency and enabling efficient use of limited disc space.

More specifically, the following may be used as a method for detecting copied fields in video data processed for 2:3 pulldown. Given a particular frame in captured video data to be encoded, the preceding and succeeding frames may be compared thereto, and patterns wherein repeating frames appear may be detected on the basis of the differences between the top fields and the bottom fields of the current frame and the immediately preceding frame. It should be appreciated that the above detection method is given by way of example, and that the actual detection method implemented is not limited to the above.

As described above, the division point/pulldown detector 45 of the video data capture apparatus 40 extracts characteristic information containing at least division points for the video data to be encoded. In addition, as described above, the division point/pulldown detector 45 may also extract video data characteristics in the form of information related to repeating image patterns in the video data, such as information relating to repeating patterns in video data that has been processed for 2:3 pulldown, for example. Subsequently, the extracted information is recorded in the auxiliary data server 50 via the network 49. Meanwhile, the video data is also stored in the video data server 48 via the video data input/output interface 46 and subsequently encoded. Furthermore, when encoding using a plurality of encoders, the video data is divided according to the total number of encoders and on the basis of the characteristics that were extracted at the time of video data capture, such that the video data is encoded in a distributed manner by the respective encoders. In addition, the video data is also processed during encoding such that copied fields from 2:3 pulldown are culled therefrom.

In authoring apparatus of the related art that compress data using one or a plurality of processing apparatus implementing highly processor-intensive image compression such as the AVC codec, the following respective processes are separately executed: video data capture, control of video data recording apparatus during capture, and video data pre-processing/compression processing. Since each of the above processes are executed separately, the processing times are very lengthy.

In contrast, in an authoring apparatus to which an information processing apparatus in accordance with the present embodiment has been applied, a VTR is controlled for video data capture while at the same time, division point candidates and repeating image patterns are also detected in an encoding pre-process, as described above. Compared to other authoring apparatus of the related art, the above authoring apparatus is able to significantly reduce the processing time for video data compression during authoring work.

In addition, the present authoring apparatus is configured such that, when capturing the video data to be encoded (i.e., as part of an encoding pre-process), information related to repeating image patterns is also extracted. Doing so makes it possible to reduce processing time, while also enabling efficient encoding without wasted processing or disc space.

Encoding of capture video data with characteristics extracted therefrom as described above will now be described with reference to Figs. 8 to 10, with a method for utilizing the extracted information also being described.

Fig. 8 is a block diagram illustrating an exemplary configuration of the video signal processing apparatus 14 in the studio authoring apparatus 10. As shown in Fig. 8, the video signal processing apparatus 14 is provided with a master controller 60, an encoder 67, and a monitor 69, for example. In addition, a video data server 48 and a compressed data server 70 are also connected to the video signal processing apparatus 14 via a network 19.

As described earlier, an edit list is supplied from the authoring application executing apparatus 18 to the video signal processing apparatus 14 as a result of the processing in step S1 of the flowchart shown in Fig. 2. More specifically, when the video data capture apparatus 40 described earlier captures video data, characteristic information regarding division point candidates and 2:3 pulldown repeating patterns is detected, and then the video data is supplied to the video data server 48. Subsequently, the video data server 48 follows the edit list issued by the authoring application executing apparatus 18 and provides an input video data file to the video signal processing apparatus 14, with the video data D1 to be processed being output to the encoder 67. At the same time, the edit list is also supplied to the master controller 60 of the video signal processing apparatus 14.

The encoder 67 switches operation in accordance with the various encoding parameters issued from the authoring application executing apparatus 18 via the master controller 60, and subsequently encodes the video data D1 that was output from the video data server 48 using MPEG, for example. At this point, the configuration of the various encoding parameters are variably controlled by the master controller 60, thereby controlling the numbers of generated bits from the encoder 67.

In addition, the encoder 67 issues the encoding results to the master controller 60. In so doing, the master controller 60 is able to detect, on a per-frame basis, information such as the picture types used in the encoding by the encoder 67, as well as the numbers of generated bits.

Furthermore, if the two-pass encoding applied in the present embodiment is conducted, then the encoder 67 also executes either first-pass or second-pass encoding.

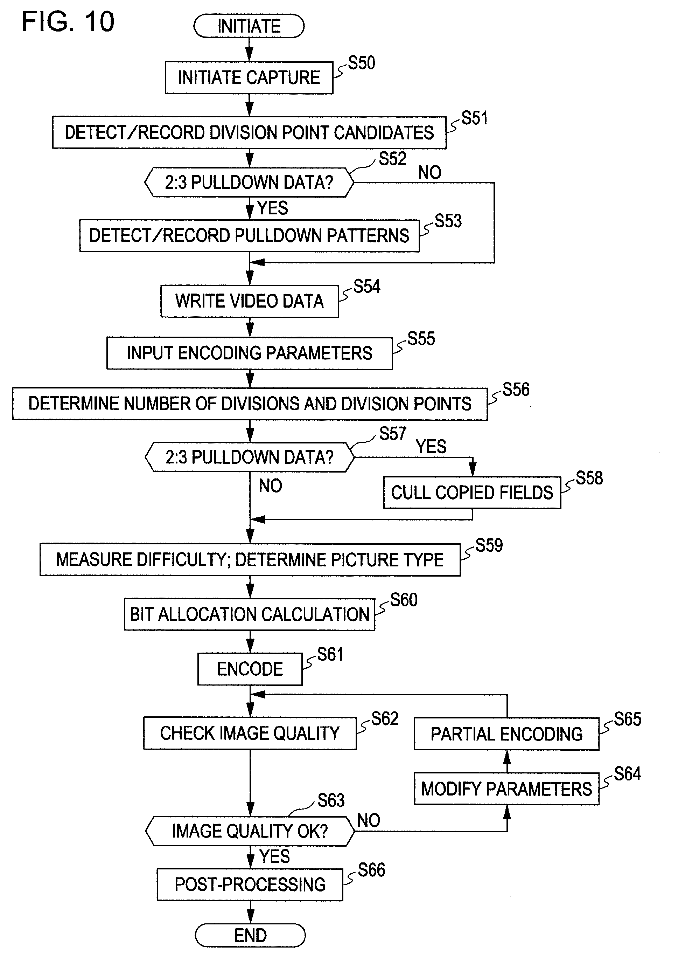

A more detailed explanation is as follows. For example, in order to configure in advance the encoding parameters to be used in the second-pass encoding, the encoder 67 may execute first-pass encoding, such as the encoding representing a portion of the processing in step S59 of the flowchart shown in Fig. 10 and hereinafter described. During first-pass encoding, the encoder 67 allocates picture types according to internal processing, and then performs first-pass encoding using the allocated pictures types with respect to the video data D1. Subsequently, and on the basis of the results of the first-pass encoding, the encoder 67 issues information such as per-frame picture types and numbers of generated bits to the encoding manager 62.

Meanwhile, the encoder 67 executes second-pass encoding like the following, being the encoding processing in step S61 of the flowchart shown in Fig. 10 and hereinafter described, for example. More specifically, the encoder 67 designates the per-frame picture types and numbers of generated bits set by the master controller 60, and then performs second-pass encoding with respect to the video data D1. The encoder 67 then causes the resulting encoded video data D2 to be stored in the compressed data server 70 via the network 19. At this point, the encoder 67 also issues information such as the data size of the encoded video data D2 stored in the compressed data server 70 to the master controller 60.

The details of the above second-pass encoding will be later described with reference to the flowchart shown in Fig. 10.

The monitor 69 is realized by means of a display apparatus, for example, and displays video corresponding video data obtained as a result of the decoding control unit 66 decompressing the encoded video data D2 that was recorded in the compressed data server 70. More specifically, when the decoding control unit 66 operates on the basis of control by the master controller 60 and decompresses the encoded video data D2 recorded in the compressed data server 70, the resulting video signal is subsequently supplied to the monitor 69. The monitor 69 then displays video corresponding to the supplied video signal (i.e., video corresponding to the encoded video data D2).

In so doing, the operator is able to check the processing results of the encoder 67 using the monitor 69 as appropriate. In other words, the video signal processing apparatus 14 is able to use the monitor 69 to show a preview of the processing results of the encoder 67. Furthermore, by issuing operational instructions to the master controller 60 via the GUI 61 on the basis of the preview results, the operator is able to make fine adjustments to various detailed encoding parameters.

The master controller 60 may, for example, be realized by means of a computer assigned to the video signal processing apparatus 14. The master controller 60 controls the overall operation of the video signal processing apparatus 14 by exchanging data with the authoring application executing apparatus 18 via the network 19.

Herein, in the video signal processing apparatus 14 of the authoring apparatus to which an information processing apparatus in accordance with the present embodiment, a distributed encoding process is implemented, wherein video data to be encoded is divided into a plurality of units, which are then individually distributed to and encoded by a plurality of encoders, as described above. By implementing distributed encoding in this way, it becomes possible to significantly reduce the processing times associated with a wide variety of encoding processes.

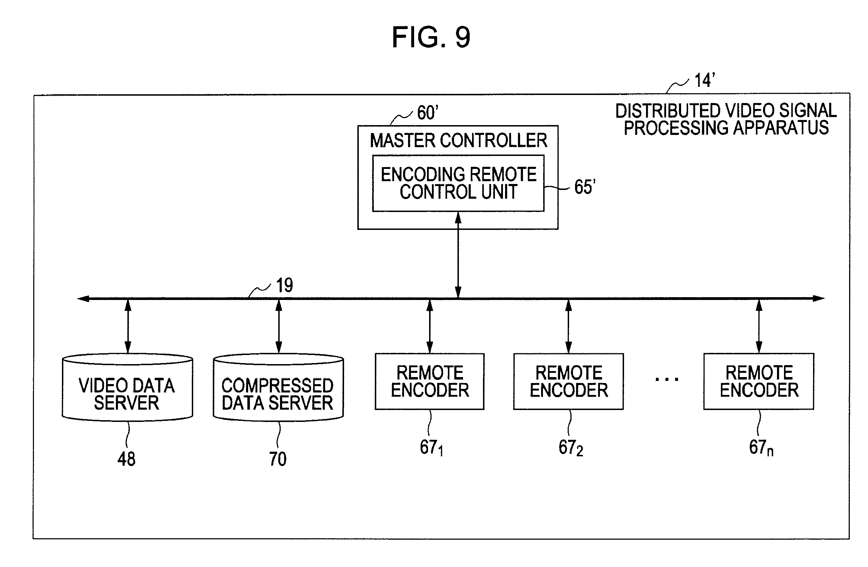

Fig. 9 is a block diagram illustrating an exemplary configuration of a distributed video signal processing apparatus implementing distributed encoding, whereby divided video data is distributed to and encoded by a plurality of encoders.

As shown in Fig. 9, the distributed video signal processing apparatus 14' is provided with a master controller 60', as well as remote encoders $67_1$ to $67_n$ connected to the master controller 60' via a network 19. In addition, the master controller 60' is also connected, via the network 19, to a video data server 48 storing captured video data to be encoded, as well as to a compressed data server 70 used to store encoded video data D2 that has been respectively processed by the individual remote encoders.

In addition, a encoding remote control unit 65' is also provided internally in the master controller 60' of the distributed video signal processing apparatus 14'. The encoding remote control unit 65' controls encoding processing performed by the respective remote encoders $67_1$ to $67_n$ connected via the network 19.

The master controller 60' and the encoding remote control unit 65' internal to the master controller 60' in the distributed video signal processing apparatus 14' shown in Fig. 9 are respectively equivalent to the master controller 60 and the encoding control unit 65 internal to the master controller 60 in the video signal processing apparatus 14 shown in Fig. 8. In other words, the master controller 60' controls the overall operation of the distributed video signal processing apparatus 14', including that of the remote encoders $67_1$ to $67_n$, by exchanging data with the authoring application executing apparatus 18 via the network 19.

Consequently, although only a single encoder 67 is illustrated in Fig. 8, the single encoder 67 can be interpreted as being equivalent to a plurality of remote encoders $67_1$ to $67_n$ connected via a network, as shown in Fig. 9. For this reason, distributed encoding will continue to be described hereinafter in terms of the video signal processing apparatus 14 shown by way of example in Fig. 8.

As shown by way of example in Fig. 8, the master controller 60 of the video signal processing apparatus 14 is provided with a GUI (Graphical User Interface) 61, an encoding manager 62, a weight control unit 63, a multi-pass control unit 64, an encoding control unit 65, and a decoding control unit 66.

More specifically, the master controller 60 respectively receives control instructions from the authoring application executing apparatus 18 as well as operational instructions from the operator by managing the GUI 61, and in addition, controls the operation of the encoder 67 by means of the encoding manager 62 and the encoding control unit 65, which are managed by the GUI 61.

In so doing, the master controller 60 is able to update the configuration of various detailed encoding parameters on the basis of the encoding file. In addition, the master controller 60 also controls encoding performed by the encoder 67 with respect to the video data D1 to be processed in accordance with the various encoding parameters that have been thus configured or updated, for example. Furthermore, the master controller 60 also receives encoding results issued from the encoder 67, and subsequently issues the encoding results to the authoring application executing apparatus 18.

In this way, the master controller 60 follows the edit list issued from the authoring application executing apparatus 18 and controls the video data file in the video data server 48 to play back the desired content to be edited. Hereinafter, in order to distinguish among encoding files supplied from other internal apparatus, the encoding file supplied to the video signal processing apparatus 14 will be referred to as the encoding file VENC.XML.

In the video signal processing apparatus 14 implementing distributed encoding herein, the master controller 60 is also provided with a weight control unit 63. The weight control unit 63 follows the encoding file VENC.XML issued from the authoring application executing apparatus 18 and determines individual encoding bit rate parameters for each encoder 67 (i.e., the remote encoders $67_1$ to $67_n$). The weight control unit 63 then issues control data, such as the maximum allocated data size set by the encoding parameters, to the multi-pass control unit 64. The multi-pass control unit 64 then modifies bit allocation configuration and configured parameters for encoding in response to operational instructions issued by the operator via the GUI 61.

The multi-pass control unit 64 may, for example, follow the encoding file VENC.XML issued from the authoring application executing apparatus 18 and configure various encoding parameters, and then issue control data corresponding to the encoding parameters to the encoding control unit 65. At this point, the multi-pass control unit 64 may also modify the configuration of various encoding parameters according to operational instructions issued by the operator via the GUI 61, for example.

The encoding parameters configured by the multi-pass control unit 64 correspond to first encoding parameters used in first-pass encoding, as well as second encoding parameters used in second-pass encoding. The first encoding parameters may include, for example, various parameters or other information for configuring the picture types set according to internal processing by the encoder 67 when executing first-pass encoding. The second encoding parameters may include, for example, information such as per-frame picture types and target bit numbers used in second-pass encoding.

The encoding control unit 65 follows a control file issued by the multi-pass control unit 64 to control the encoding processing executed by each encoder 67 (i.e., the remote encoders $67_1$ to $67_n$). In addition, the encoding control unit 65 also issues per-frame difficulty data for each encoding process to each encoder 67 (i.e., the remote encoders $67_1$ to $67_n$), while additionally recording the compressed, encoded video data D2 in the compressed data server 70.

In addition, when executing second-pass encoding to be hereinafter described, the encoding control unit 65 may also execute processing like the following, for example.

The encoding control unit 65 may follow a control file issued from the authoring application executing apparatus 18 and subsequently control the first-pass and second-pass encoding processing executed by the encoder 67.

In addition, the encoding control unit 65 may also respectively detect the encoding difficulty and picture type from the first-pass encoding results on a per-frame basis, and then issue the detection results to the multi-pass control unit 64. The multi-pass control unit 64 then uses the per-frame difficulties and picture types issued thereto to configure the second encoding parameters used in second-pass encoding. Difficulty will be described later.

The encoding control unit 65 also conducts a control such that the final encoded video data D2 resulting from the second-pass encoding is stored in the compressed data server 70 via the network 19.

The above thus describes an exemplary configuration of a video signal processing apparatus 14 in an authoring apparatus to which an information processing apparatus in accordance with the present embodiment has been applied.

The processing executed by an information processing apparatus in accordance with the present embodiment will now be described with reference to Fig. 10, including description of the second-pass encoding performed in the above video signal processing apparatus 14. As described earlier, an information processing apparatus in accordance with the present embodiment divides video data into a plurality of units, distributes the respective units to individual calculation apparatus, and compresses the data therewith, in order to reduce encoding time. In other words, an information processing apparatus in accordance with the present embodiment conducts distributed encoding.

In step S50, video data capture is initiated in the video data capture apparatus 40. When time information (i.e., start points (start time codes) and end points (end time codes)) is set by the operator using the GUI 42 managed by the master controller 41 of the video data capture apparatus 40, the VTR control unit 43 conducts playback control operations on the basis of the time information so as to cause the VTR 47 to fast-forward or rewind video, for example. Subsequently, on the basis of the processing executed by the VTR control unit 43, video data is captured by the data capture control unit 44 via the video data input/output interface 46 and thereby acquired by the master controller 41.

Next, in step S51, division points in the captured video data to be encoded are detected and recorded as an encoding pre-process. The video data to be encoded that was captured by the master controller 41 via the video data input/output interface 46 is sent to the division point/pulldown detector 45 internal to the master controller 41. Division points candidates for use in division encoding are then detected in the division point/pulldown detector 45.

When conducting division encoding, it is not preferable for the division points to be arbitrary locations in the video data. Instead, it is preferable to divide video data using division points at locations whereby image quality is unaffected. Scene change points in the video data are a specific example of such division points. Hereinafter, the detection of scene change points as division points will be described by way of example.

Typically, large changes in brightness occur at scene change points. Given this behavior, it is possible to detect scene change points by comparing a preceding scene to a succeeding scene and then checking the change in brightness between the two scenes. Consequently, it is possible to easily detect division point candidates by designating scene change points to be division point candidates and then extracting brightness changes between adjacent scenes.

Division point candidates are thus detected in this way between the start points and end points of video data.

After having detected division point candidates in the captured video data to be encoded, information related to the division point candidates is recorded in the auxiliary data server 50 that is connected to the video data capture apparatus 40 via the network 49.

Next, in step S52, it is determined whether or not the captured video data to be encoded has been extended by 2:3 pulldown. If the capture video data is material that has been processed for 2:3 pulldown (step S52; YES), then the process proceeds to step S53.

More specifically, if it is determined in step S52 that the capture video data is material that has been processed for 2:3 pulldown, then pulldown patterns are detected and recorded in step S53. In other words, in step S53, adjacent frames in the captured video data are compared, and then a pattern wherein repeating frames appear is detected on the basis of the differences between the top fields and the bottom fields of the current frame and the immediately preceding frame. The 2:3 pulldown patterns detected in this way are then recorded in the auxiliary data server 50 connected to the network 49, together with the information related to division point candidates. The process then proceeds to step S54.

On the other hand, if it is determined in step S52 that the captured video data is not material that has been processed for 2:3 pulldown (step S52; NO), then the process directly proceeds to step S54. It should be appreciated that although the above example describes the detection of repeating image patterns associated with 2:3 pulldown processing, the present invention is not limited thereto. In other words, even if the video data has not been processed for 2:3 pulldown, repeating image patterns (i.e., characteristics) therein can still be similarly extracted if such repeating image patterns exist.

In step 54, the video data for which division point candidates and 2:3 pulldown patterns were detected in the above steps is subsequently written in an uncompressed state. More specifically, the video data is recorded in the video data server 48 via the video data input/output interface 46 of the video data capture apparatus 40. The process then proceeds to step S55. In an information processing apparatus in accordance with the present embodiment as described above, the video data D1 thus recorded in the video data server 48 is then encoded in the video signal processing apparatus 14.

In step S55, encoding parameters are input and configured prior to encoding the video data D1. More specifically, once the video data D1 has been supplied to the master controller 41 of the video signal processing apparatus 14 from the video data server 48, the master controller 41 acquires various information for encoding the video data D1 to be edited from the encoding file VENC.XML supplied from the authoring application executing apparatus 18.

For example, in the processing executed in step S55, information such as access (chapter) points, disc capacity, VTR start and end times, and the data size allocatable to the video data D1 may be acquired from among the various information stated in the encoding file VENC.XML. In addition, in such an information processing apparatus in accordance with the present embodiment implement distributed encoding, information regarding the total number n of usable remote encoders $67_1$ to $67_n$ may also be acquired.

Upon acquiring the various information for encoding in step S55, the process proceeds to step S56.

In step S56, the number of divisions and the division points to be used in distributed encoding are determined. As described earlier, an information processing apparatus in accordance with the present embodiment implements distributed encoding in order to reduce encoding time, wherein video data is divided into a plurality of units, and then the respective units are distributed to and encoded by individual encoders. When executing distributed encoding, in order to divide the video data to be encoded that has been supplied from the video data server 48, the information related to the video data division point candidates that was detected and recorded in the auxiliary data server 50 in step S51 is first referenced, and then the video data D1 is divided.

In other words, in step S55, information regarding the total number n of remote encoders that can be used for distributed encoding is acquired. Such information may be acquired from remote encoder IDs or IP addresses that were registered during initialization processing (not shown in the drawings). Upon acquiring the above information, division points are determined so as to create approximately equal intervals of video data for each of the remote encoders $67_1$ to $67_n$ shown in Fig. 6. The division points herein are determined while referencing the information related to division point candidates and recorded in the auxiliary data server 50.

In this way, encoding parameters are configured in an information processing apparatus in accordance with the present embodiment by referencing video data characteristic information that was extracted as an encoding pre-process. In so doing, since characteristic information has already been extracted as a pre-process, it is possible to significantly reduce encoding time as compared to that of authoring apparatus of the related art, wherein such characteristic extraction processing is conducted in the encoding stage.

Next, in step S57, it is determined whether or not the video data D1 to be encoded has been extended by 2:3 pulldown. If it is determined that the video data D1 has been processed for 2:3 pulldown (step S57; YES), then the process proceeds to step S58.

In step S58, copied fields are culled from the video data D1 that has been processed for 2:3 pulldown. At this point, culling is conducted by referencing the pulldown-related information from the video data D1 that was detected and recorded in the auxiliary data server 50 as an encoding pre-process in step S53.

Thus, in order to make efficient use of limited disc space, copied fields from 2:3 pulldown are culled in step S58 on the basis of the information that was detected and recorded as a pre-process at the time of video data capture. Subsequently, the remaining video data after culling is encoded. Since information related to 2:3 pulldown is thus confirmed when an information processing apparatus in accordance with the present embodiment executes encoding, it is possible to reduce processing time compared to that of authoring apparatus of the related art. Moreover, efficient encoding can be conducted without wasted disc space.

After having culled the copied fields from 2:3 pulldown as described above, the process proceeds to step S59. Also, if it is determined in step S57 that the video data to be encoded has not been extended by 2:3 pulldown (step S57; NO), then the process proceeds directly to step S59.

In step S59, the master controller 60 in the video signal processing apparatus 14 controls each encoder 67 ($61_1$ to $67_n$) connected to the network 19 and performs first-pass encoding with respect to the video data D1 to be edited, following the first encoding parameters set by the various information acquired by means of the processing in step S55. Subsequently, the master controller 60 respectively detects per-frame difficulties and picture types for encoding from the resulting first encoded video data.

More specifically, when the video data D1 to be edited is divided into approximately equal intervals in step S56 and then output to each encoder 67 ($67_1$ to $67_n$), each encoder 67 ($67_1$ to $67_n$) sets a respective picture type for each frame constituting the video data D1. In other words, each encoder 67 ($67_1$ to $67_n$) sets the picture type to I for frames designated by instructions from the master controller 60. In addition, on the basis of the information related to scene changes that was acquired by means of the processing in step S55, each encoder 67 ($67_1$ to $67_n$) also forcibly sets the picture type to I for frames determined to be scene changes by correlation with adjacent frames. Subsequently, each encoder 67 ($67_1$ to $67_n$) executes processing to define closed GOPs, being frame groups starting at a frame set to an I picture and extending to the frame immediately preceding the next I picture.

In addition, each encoder 67 ($67_1$ to $67_n$) also uses the picture types configured in this way to successively perform first-pass encoding with a constant quantization step with respect to each frame constituting the video data D1. Subsequently, each encoder 67 ($67_1$ to $67_n$) issues the numbers of bits generated during this process (i.e., the respective numbers of bits generated upon respectively encoding each frame) to the master controller 60, while also issuing the picture type of each frame to the master controller 60.

Upon receiving the above information from each encoder 67 ($67_1$ to $67_n$), the master controller 60 respectively detects the difficulty and picture type on a per-frame basis. In other words, the master controller 60 detects the picture types for each frame that were issued from each encoder 67 ($67_1$ to $67_n$) directly as the picture types for each frame. In addition, the master controller 60 also detects (i.e., measures) the respective numbers of bits generated for each frame that were issued from each encoder 67 ($67_1$ to $67_n$), and takes the detected results to be the difficulty for each frame.

In the present specification, difficulty refers to the respective data sizes of each encoded frame obtained as a result of performing encoding with a constant quantization step with respect to the video data D1 to be edited.

More specifically, in inter frame encoding (i.e., the P or B picture encoding types), the predicted error (i.e., difference) from the predictive frame increases in portions of intense motion, and thus an equivalent increase in data size is used in order to alleviate degradations in image quality. In addition, in intra-frame encoding (i.e., the I picture encoding type), higher-order coefficient data is generated as a result of the discrete cosine transform when a large number of high-frequency components are present, and thus an equivalent increase in data size is used in order to alleviate degradations in image quality. Consequently, when the video data D1 is encoded with a constant quantization step, large amounts of data are detected in the portions (i.e., frames) where a large amount of data is used in order to alleviate degradations in image quality. Given the above, the respective data sizes for each frame constituting the encoded video data D2 obtained as a result of encoding the video data D1 to be edited with a constant quantization step thus indicate the difficulty of each respective frame.

After having completed the series of processes in step S59 as above, the process proceeds to step S60. In step S60, the master controller 60 executes bit allocation calculation using the per-frame difficulties and picture types detected as a result of the processing in step S59, thereby setting target bit numbers on a per-frame basis.

Herein, bit allocation calculation refers to calculations wherein, for example, the per-frame difficulties and picture types detected as a result of the processing in step S59 are used to distribute, to each frame, portions of the target number of bits for the entire encoded video data D2 that is obtained when second-pass encoding is performed with respect to the video data D1 to be edited.

In other words, in step S60, the master controller 60 first calculates the total number of bits TOTAL_SUPPLY that can be actually distributed to the video data D1 (i.e., the encoded video data D2).

$$\text{TOTAL\_SUPPLY} = \text{TOTAL\_BYTES} - \text{TOTAL\_HEADER} \quad (1)$$

In the above Eq. 1, TOTAL_BYTES represents the amount of data allocatable to the video data D1 that was acquired in step S55, and corresponds to the target data size of the entire encoded video data D2 to be recorded in the file server 17 over the network 19. TOTAL_HEADER represents the data size of accompanying header or similar data in the encoded video data D2, and is determined by the total number of GOPs.

Consequently, by computing Eq. 1, the master controller 60 calculates the amount of data allocatable to the encoded video data D2, excluding accompanying data therein, and takes the result to be the total number of bits TOTAL_ SUPPLY that can be actually allocated to the video data D1.

Next, the master controller 60 takes the total number of bits TOTAL_SUPPLY that can be actually allocated to the video data D1, and respectively allocates portions thereof to each encoding unit. Hereinafter, the data size allocated to each encoding unit will be referred to as the target bit number for a corresponding encoding unit, and represented as SUPPLY_BYTES herein.

In addition, for each encoding unit, the master controller 60 respectively computes the sum of the difficulties (i.e., the difficulties detected in step S59) for each frame belonging to a corresponding encoding unit. Hereinafter, per-frame difficulties are represented as DIF, and the sum of respective difficulties is represented as DIF_SUM.

Subsequently, for each encoding unit, the master controller 60 solves an evaluation function for allocating bits on a per-GOP basis. The evaluation function herein may be expressed by the following Eq. 2, for example.

$$Y = BX \quad (2)$$

In Eq. 2, Y represents the target bit number SUPPLY_BYTES for the encoding unit currently being computed, and X represents the sum DIF_SUM of the difficulties for each frame belonging to the encoding unit currently being computed.

Upon configuring the evaluation function as shown in Eq. 2 (i.e., upon solving for the coefficient B in the evaluation function shown in Eq. 2), the master controller 60 successively computes the following Eq. 3 using the coefficient B for each encoding unit.

$$GOP\_TGT = B \times GOP\_DIF\_SUM \quad (3)$$

In Eq. 3, GOP_DIF_SUM represents the sum of the difficulties DIF for each frame belonging to the GOP currently being computed. GOP_TGT represents the target bit number for the GOP currently being computed.

In other words, the target bit number GOP_TGT for the GOP currently being computed expresses the amount of data that is taken from the target bit number SUPPLY_BYTES of the encoding unit containing the GOP currently being computed, and then allocated to the current GOP according to the difficulty GOP_DIF_SUM of the current GOP.

Thus, for each GOP, the master controller 60 respectively executes processing to respectively distribute portions of the target bit number GOP_TGT of a given GOP to each frame belonging to the given GOP. As a result, a target bit number is set for each frame.

The above series of processes collectively form the bit allocation calculation that is executed in step S60. Thus, in the bit allocation calculation in step S60, target bit numbers are set on the basis of the first-pass encoding results (i.e., the results from step S59), the target bit numbers herein being one of the second encoding parameters used in second-pass encoding.

Upon completion of the processing in step S60 as described above, the process subsequently proceeds to step S61. In step S61, the master controller 60 configures the second encoding parameters, including at least the per-frame target bit numbers set by the bit allocation calculation in step S60, as well as the per-frame picture types detected in step S59. The master controller 60 then executes encoding processing (i.e., second-pass encoding).

Subsequently, in step S62, the master controller 60 conducts an image quality check by executing preview processing with respect to the encoded video data D2 that should have been obtained by performing second-pass encoding with respect to the video data D1 to be edited and in accordance with the second encoding parameters.

The preview processing in step S62 refers to the following series of processes, for example. As described earlier, the video data server 48 operates in response to control by the master controller 60 that is based on operational instructions issued by the operator via the GUI 61, thereby supplying the video data D1 to be edited to each encoder 67 ($67_1$ to $67_n$). Each encoder 67 ($67_1$ to $67_n$) then encodes the video data D1 according to the second encoding parameters, again decodes the resulting encoded video data D2 without outputting to the network 19, and then supplies the resulting video signal to the monitor 69. The monitor 69 then displays video corresponding to the video signal. In other words, preview video is displayed on the monitor 69, the preview video corresponding to the encoded video data D2 that should have been obtained by performing second-pass encoding with respect to the video data D1 to be edited and in accordance with the second encoding parameters.

After having conducted preview processing and an image quality check of the encoded video data D2 obtained by second-pass encoding, the process subsequently proceeds to step S63.

In step S63, the master controller 60 determines whether or not the operator's image quality evaluation is "OK". In other words, the operator evaluates the image quality of the preview video (i.e., the video corresponding to the encoded video data D2) displayed on the monitor 69 as a result of the processing in step S62, and then operates the GUI 61 so as to cause an evaluation result to be input into the master controller 60. For example, if the operator is satisfied with the image quality and operates the GUI 61 so as to issue instructions for initiating second-pass encoding, then it is determined in step S63 that the operator's image quality evaluation is "OK" (step S63; YES), and the process proceeds to step S66.

In step S66, the master controller 60 causes the encoded video data D2 resulting from the second-pass encoding to be stored in the compressed data server 70 via the network 19, while additionally executing post-processing, such as issuing the second-pass encoding results to the authoring application executing apparatus 18. Upon completion of the post-processing in step S66 as described above, the encoding process is terminated.

In contrast, if the operator is not satisfied with the image quality of the preview video (i.e., the video corresponding to the encoded video data D2 prior to being stored in the compressed data server 70) displayed on the monitor 69 as a result of the preview processing in step S62, then the operator may operate the GUI 61 and select processing for modifying or correcting the encoded video data D2, for example. If the above occurs, then it is subsequently determined in step S63 that the operator's image quality evaluation is not "OK" (step S63; NO), and the process proceeds to step S64.

In step S64, the master controller 60 modifies the parameters used in second-pass encoding.

More specifically, the master controller 60 executes processing to partially modify the image quality by partially modifying the encoding parameters in response to operational instructions issued by the operator via the GUI 61. In addition, the master controller 60 also re-executes bit allocation calculation similar to that of the above step S60, thereby updating target bit number settings for the portions of the video data D1 for which correction or modification is desired. The bit allocation calculation conducted in step S64 uses the results of partial image quality modification associated with the modification of the most recent encoding parameters.

After having thus modified in step S64 the encoding parameters or other information associated with the portions of the video data for which correction or modification is desired, the process proceeds to step S65, wherein partial re-encoding using second-pass encoding (or first-pass encoding, depending on the encoding parameters) is performed with respect to the portions of video data having updated encoding parameters.

The units whereby the above partial re-encoding is conducted are the division processing intervals shown in Fig. 6 that contain the portions to be modified or corrected. Subsequently, the partial-encoded division processing intervals are substituted into and joined with the compressed data.

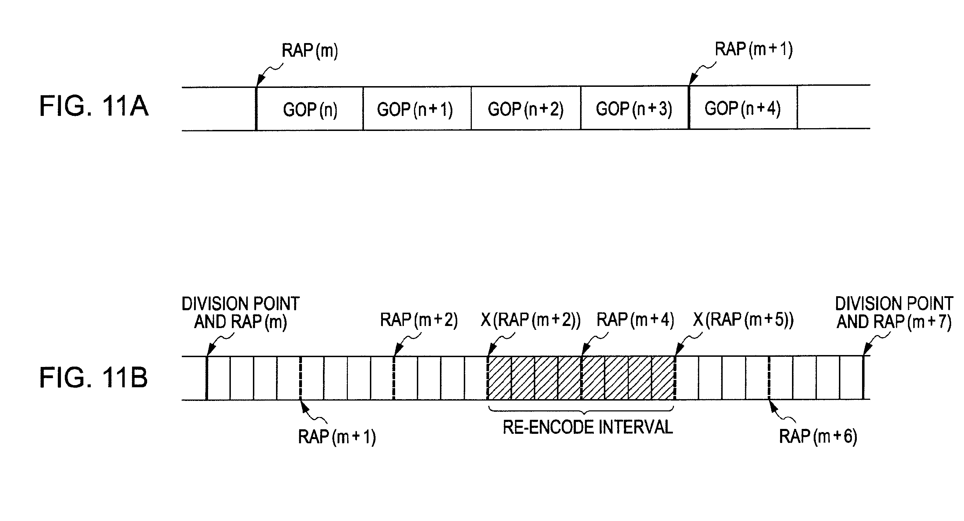

The processing units used in partial encoding will now be described in detail and with reference to Figs. 11 to 13.

Fig. 11 is a schematic diagram of video data illustrating the relationship between RAPs (Random Access Points), to be hereinafter described, and GOPs. In consideration of utility during partial encoding, the encoder used herein includes a function for limiting buffer occupancy at fixed intervals. By means of such a function, buffer overflows at join points are prevented from occurring, even when joining separately-encoded streams. The buffer reset points inserted at fixed intervals are referred to as RAPs, and are the points labeled RAP(m), RAP(m+1), ..., in Figs. 11A and 11B.

When conducting distributed encoding using a plurality of encoders as described in the foregoing, the most efficient division encoding units are the minimum number of RAP intervals containing the data substitution interval, as shown in Fig. 11B. However, in order for the buffer occupancy control function to operate with regard to joining streams, the number of generated bits is restricted during partial re-encoding wherein such RAP intervals are used as the partial re-encoding intervals. As a result, a reduction in image quality occurs in the re-encoding interval formed between the locations labeled X in Fig. 11B.

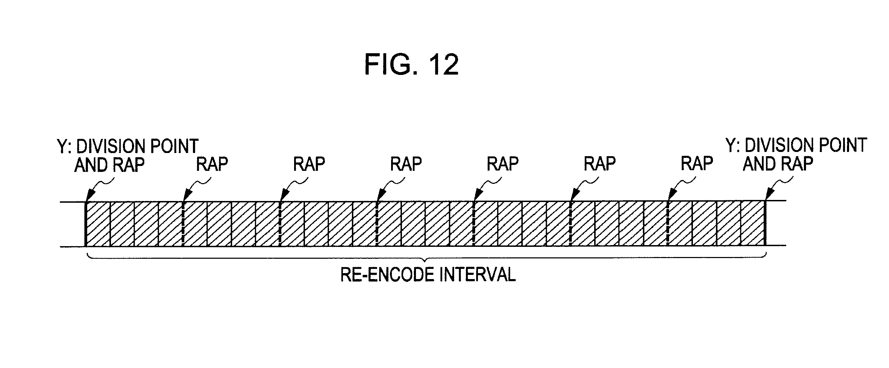

Consequently, in order to avoid such image quality reductions, an information processing apparatus in accordance with the present embodiment is configured such that partial re-encoding is not conducted over the minimum number of RAP intervals described above (such as the X-X interval shown in Fig. 11B, for example), but instead over the minimum number of distributed encoding intervals (such as the Y-Y interval shown in Fig. 12) containing the locations to be modified, corrected, or otherwise altered, as shown in Fig. 12. In other words, partial re-encoding is configured over the minimum number of division point intervals containing the locations to be corrected or modified, wherein the division point intervals are determined by referencing the division point candidates that were extracted in the form of characteristic information during the capture of the video data to be encoded.

In so doing, the division points whereby division encoding is performed become the same points as the points whereby partial encoding for modification or correction is performed (such as the locations labeled Y in Fig. 12). For this reason, image quality equivalent to the image quality before partial re-encoding is maintained, and it becomes possible to resolve the problem of reduced image quality.

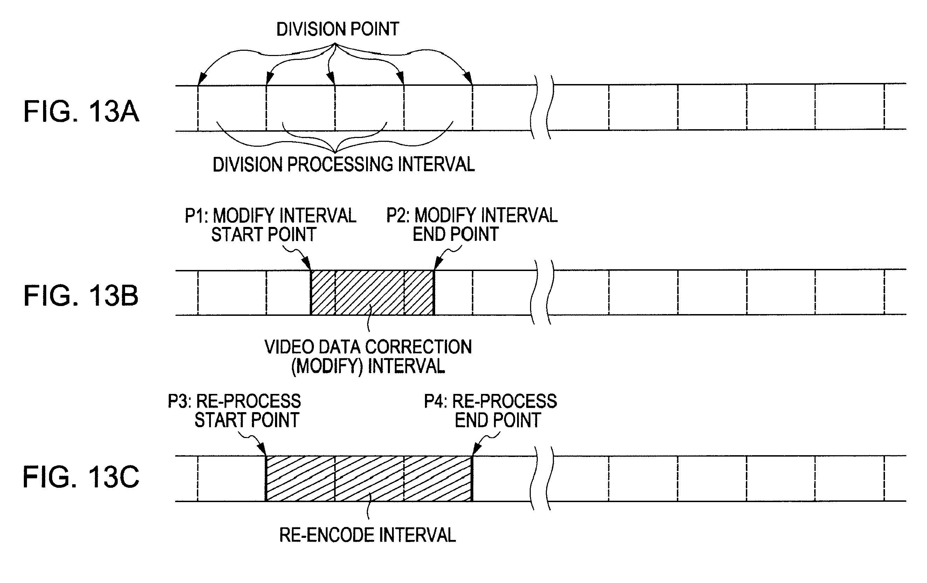

An actual determination of re-encoding intervals with regard to video data correction (modify) intervals will now be described with reference to Figs. 13A to 13C. Fig. 13A illustrates the division points (such points also being RAPs, and indicated by broken lines) described in Figs. 11B and 12, as well as division processing intervals in a stream of division-encoded data that was joined after being division-encoded. As described earlier, when performing partial re-encoding, an information processing apparatus in accordance with the present embodiment does not re-encode over the minimum number of RAP intervals, but instead re-encodes over the minimum number of division processing intervals that are delineated by the division points.

Subsequently, after having conducted an image quality check with respect to the stream obtained from distributed encoding, if it is desirable to correct or modify a partial interval in the data (i.e., a video data correction (modify) interval) as shown in Fig. 13B, then a search is performed, starting from the modify interval start point P1 and working backwards, to find the adjacent re-process start point P3 shown in Fig. 13D. Meanwhile, another search is performed, starting from the modify interval end point P2 and working forwards, to find the adjacent re-process end point P4. In this way, video data is subsequently captured from the VTR and partial re-encoding is conducted with respect to the re-encoding interval obtained as a result of the above searches.

After having completed re-encoding as described above, the re-encoded interval is then substituted into and joined with the encoded video data.

As described above, an information processing apparatus in accordance with the present embodiment is configured to conduct partial re-encoding by setting the division processing intervals as the processing units and then searching for the minimum number of division processing intervals in the video data that contain the locations to be corrected, modified, or otherwise altered. Doing so prevents reductions in image quality before or after performing partial re-encoding, while additionally enabling partial re-encoding to be performed over a minimum range. When compared to authoring apparatus of the related art that perform re-encoding over all intervals, the amount of data to be re-encoded is minimized, thereby realizing efficient compression operations.

In addition, as described earlier, when an information processing apparatus in accordance with the present embodiment conducts parallel, distributed encoding, a plurality of remote encoders $67_1$ to $67_n$ are connected via a network as shown in Fig. 9, and encoding is conducted using the plurality of remote encoders $67_1$ to $67_n$. Compared to distributed encoding that uses a plurality of encoders connected via a bus, for example, use of the above remote encoders $67_1$ to $67_n$ connected via a network does not involve reciprocal control among the encoders, thereby allowing each encoder to conduct encoding processing independently and thus increase the freedom of each of the remote encoders $67_1$ to $67_n$.

The above configuration enables the realization of efficient re-encoding, particularly for an information processing apparatus in accordance with the present embodiment configured to conduct partial re-encoding over the minimum number of division point intervals containing the locations to be corrected, modified, or otherwise altered. More specifically, processing using encoders connected via a bus or similar means involves controlling all encoders, including encoders that are not conducting re-encoding. In contrast, in an information processing apparatus in accordance with the present embodiment wherein the encoders are connected via a network, it is possible to cause only a portion of the encoders connected via the network to operate independently, while causing the other encoders to pause operation. As a result, efficient processing is executed with a minimum of data transfer. Moreover, the above also makes it possible to reduce the processing time for distributed encoding.

After having performed the partial encoding as described above in step S65, the process returns to step S62, and the processing in step S62 and thereafter is repeated.

The foregoing thus describes exemplary processing executed by an information processing apparatus in accordance with the present embodiment. When an information processing apparatus in accordance with the present embodiment executes distributed encoding in this way, a pre-process is conducted during the capture of the video data to be encoded, wherein locations marking scene changes are detected as division point candidates, and additionally, wherein repeating image patterns in video data that has been processed for 2:3 pulldown or similar conversion are detected, for example. The video data characteristic information thus detected is then recorded in the auxiliary data server 50.

In authoring apparatus of the related art, information such as the above division point candidates and repeating image patterns are automatically detected when configuring the encoding parameters, or when measuring difficulties in the case where two-pass encoding is executed. In other words, in authoring apparatus of the related art, the processes of video data capture, control of video data recording apparatus during capture, and pre-process/compression processing are conducted separately, and thus a large amount of processing time is involved, and real-time compression is not achieved.

In contrast, in an information processing apparatus in accordance with the present embodiment, characteristic information, such as information related to division point candidates and repeating image patterns, is detected as an encoding pre-process while controlling a playback apparatus during video data capture. The video data having characteristic information extracted therefrom is then recorded onto a video data server, while the detected information is recorded onto an auxiliary data server. In so doing, captured video data D1 can be efficiently encoded in real-time, enabling authoring operations to be performed several times faster than that of authoring apparatus or other apparatus of the related art. Moreover, efficient encoding without wasting limited disc space is executed with short processing times.

The foregoing series of processes herein may be executed by means of hardware or software.

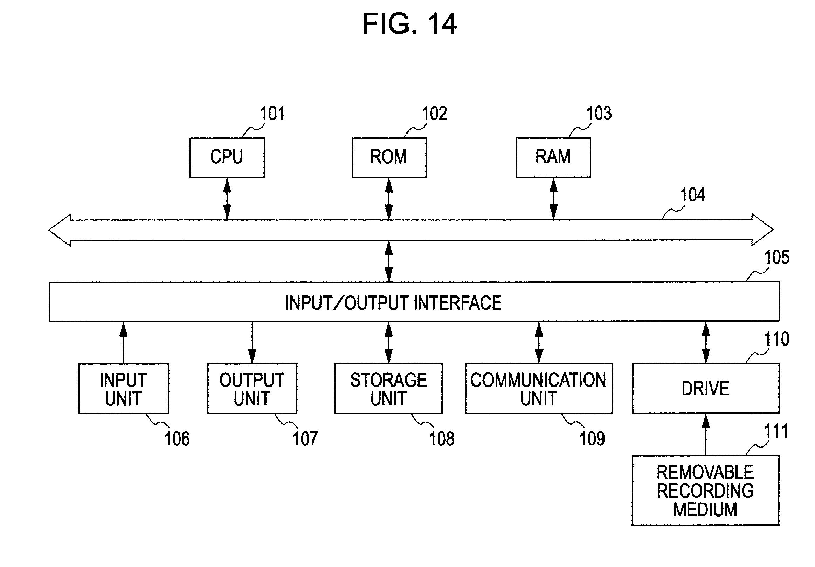

If the foregoing series of processes is executed by means of software, then all or part of the studio authoring apparatus 10 shown in Fig. 1 may be realized by a computer like that shown in Fig. 14, for example. The part of the studio authoring apparatus 10 realized by a computer may be, for example, all of the video data capture apparatus 40 shown in Fig. 5, or part of the video data capture apparatus 40, such as the master controller 41.

In Fig. 16, the CPU (Central Processing Unit) 101 executes various processing by following a program recorded onto ROM (Read-Only Memory) 102, or by following a program that has been loaded into RAM (Random Access Memory) 103 from a storage unit 108. The RAM 103 also stores other information as appropriate, such as data used during the execution of the various processing by the CPU 101.

For example, if the master controller 41 shown in Fig. 5 is realized by means of a computer, then components such as the VTR control unit 43, the data capture control unit 44, and the division point/pulldown detector 45 may be realized as programs executed by the CPU 101.

The CPU 101, the ROM 102, and the RAM 103 are mutually connected via a bus 104. Also connected to the bus 104 is an input/output interface 105. The input/output interface 105 is connected to an input unit 106, an output unit 107, the storage unit 108, and a communication unit 109.

The input unit 106 includes input devices such as touch panel that also acts as the display unit of the output unit 107, a keyboard, a remote control containing a light sensor, and a mouse, for example.

The output unit 107 may include a single display unit such as a monitor, a single audio output unit such as a speaker or headphone jack, or a combination of the above.

The storage unit 108 includes components such as a hard disk, for example. The communication unit 109 includes a modem, terminal adapter, or wireless communication device, for example, and controls communication with other information processing apparatus. For example, if the master controller 41 shown in Fig. 5 is realized by the computer shown in Fig. 14, then the communication unit 109 controls communication with the auxiliary data server 50 via the network 49.

A drive 110 may also be connected to the input/output interface 105 as appropriate. When a removable recording medium 111 such as a magnetic disk, optical disc, magneto-optical disk, or semiconductor memory is correctly loaded into the drive 105, one or more computer programs may be read from the removable recording medium 111 and installed onto the storage unit 108 as appropriate.

In the case where the foregoing series of processes is executed by means of software, the one or more programs constituting such software may be installed over a network or from a recording medium onto a computer with special-purpose hardware built in, or alternatively, onto a general-purpose personal computer or similar apparatus able to execute various functions by installing various programs thereon.

As shown by way of example in Fig. 14, the above recording medium containing the one or more programs may be separate from the main body of the apparatus and realized by means of a removable recording medium 111 distributed in order to provide programs to one or more users (i.e., packaged media). The removable recording medium 111 may be a magnetic disk (such as a floppy disk), an optical disc (such as a CD-ROM (Compact Disc Read-Only Memory) or DVD (Digital Versatile Disc)), a magneto-optical disc (such as an MD (MiniDisc)), or semiconductor memory upon which one or more programs have been recorded. However, the above recording medium may also be distributed to users after having been incorporated into the main body of the relevant apparatus in advance, and may be realized by means of a component such as the ROM 102 or the hard disk included in the storage unit 108, and onto which one or more programs have been recorded.

As described earlier, an information processing apparatus in accordance with the present embodiment is configured such that, if locations to be corrected or modified in a portion of video data are discovered during the image quality check conducted after performing distributed encoding, then partial re-encoding is conducted over the minimum number of division processing intervals containing the locations to be corrected, modified, or otherwise altered. Doing so makes it possible to reduce processing time compared to that of authoring apparatus of the related art wherein video data is re-captured and then re-encoded over all intervals. In other words, re-encoding due to correction or modification of a portion of the video data is minimized, thereby realizing efficient encoding without wasted processing.

In addition, partial re-encoding is not conducted over RAP intervals, and is instead conducted in units of division processing intervals delineated by division points. For this reason, reductions in image quality due to restrictions in the number of generated bits imposed by a buffer occupancy limiting control for RAPs are prevented, and image quality is maintained before and after re-encoding.

Furthermore, the above division points that form the re-encoding intervals are determined at the time of distributed encoding. During the capture of the video data to be encoded, characteristic information at least relating to division point candidates is extracted from the video data and then stored. Subsequently, the stored characteristic information is referenced when configuring encoding parameters to determine the division points in the video data to be used in distributed encoding. Doing so makes it possible to significantly reduce processing time compared to that of authoring apparatus of the related art wherein video data capture and video data preprocessing/compression are conducted separately.

Similarly, characteristic information relating to repeating image patterns is also extracted in addition to the above division point candidates during video data capture as an encoding pre-process. For this reason, it is possible to reduce processing time, while additionally realizing efficient encoding optimized for limited disc space.

It should be appreciated that the present invention is not limited to embodiment described in the foregoing, and that various modifications are of course also possible without departing from the scope and spirit of the present invention.

For example, in the case where the foregoing series of processes is executed by means of software, the one or more programs constituting such software may be installed over a network or from a recording medium onto a computer with built-in, special-purpose hardware. Alternatively, the one or more programs may be installed onto a general-purpose personal computer or similar apparatus able to execute various functions by installing various programs thereon.

In addition, a recording medium containing the one or more programs may be distributed separately from the main body of the apparatus in order to provide programs to one or more users. For example, the recording medium may be a magnetic disk (such as a floppy disk), an optical disc (such as a CD-ROM or DVD), a magneto-optical disc (such as an MD), semiconductor memory, or other removable recording medium onto which one or more programs have been recorded (i.e., packaged media). In addition, the above recording medium may also be distributed to users after having been incorporated into the main body of the relevant apparatus in advance, and may be realized by means of a component such as ROM or a hard disk onto which one or more programs have been recorded.

In the present specification, the respective steps described with reference to the accompanying flowcharts are processed in a time series following the order described in the foregoing. However, it should be appreciated as obvious that the steps herein may also be processed in parallel or executed individually without strictly being processed in a time series.

The present application contains subject matter related to that disclosed in Japanese Priority Patent Application JP 2008-111760 filed in the Japan Patent Office on April 22, 2008, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

**Claims**

1.  An information processing apparatus, comprising:

    an encoded data joiner configured to join divided and encoded data generated as a result of division-encoding target data that has been divided into a plurality of intervals at a predetermined number of division points;
    a decoder configured to decompress the data generated by the encoded data joiner; and
    a re-encoder configured to re-encode the decoded data generated by the decoder;
    wherein
    the re-encoder re-encodes the decoded data over the minimum number of division point intervals containing data portions to be altered.

2.  The information processing apparatus according to Claim 1, further comprising:

    a data capture unit configured to control playback from a recording medium onto which video data has been recorded, and additionally capture the target data to be encoded;
    a characteristic extractor configured to receive the target data to be encoded, and then extract characteristic points therefrom as an encoding pre-process, the characteristic points including at least points where the target data to be encoded can be divided;
    a storage unit configured to store information regarding the characteristic points extracted by the characteristic extractor;
    a divider configured to divide the target data to be encoded into a predetermined number of sets of divided data; and
    a plurality of encoders configured to encode the divided data into the divided and encoded data;
    wherein
    the division points in the predetermined number of division points are determined by the divider on the basis of the total number of the plurality of encoders and the information regarding the characteristic points, such that the divided data can be distributed approximately equally to each encoder.

3.  The information processing apparatus according to Claim 2, wherein the points where the target data to be encoded can be divided are scene change points in the data to be encoded.

4.  The information processing apparatus according to Claim 2 or Claim 3, wherein the plurality of encoders are connected via a network.

5.  An information processing method, comprising the steps of:

    joining divided and encoded data generated as a result of division-encoding target data that has been divided into a plurality of intervals at a predetermined number of division points;
    decoding the data generated in the encoded data joining step; and
    re-encoding the decoded data generated in the decoding step;
    wherein
    in the re-encoding step, the decoded data is re-encoded over the minimum number of division point intervals containing data portions to be altered.

# FIG. 1

STUDIO AUTHORING APPARATUS — 10

AUTHORING APPLICATION EXECUTING APPARATUS — 18

19

VIDEO SIGNAL PROCESSING APPARATUS — 14

MULTIPLEXER — 15

AUDIO SIGNAL PROCESSING APPARATUS — 13

FILE SERVER — 17

SUBTITLE SIGNAL PROCESSING APPARATUS — 12

MENU SIGNAL PROCESSING APPARATUS — 11

DOWNLOADER — 16

WRITER — 20

DLT — 21   HDD — 22   NETWORK — 23

EP 2 112 663 A2

20

# FIG. 2

INITIATE STUDIO AUTHORING
APPARATUS PROCESSING

AUTHORING APPLICATION EXECUTING
APPARATUS NOTIFIES VIDEO SIGNAL
PROCESSING APPARATUS AND
OTHER RESPECTIVE INTERNAL APPARATUS
OF CONTENT TO BE EDITED
S1

AUTHORING APPLICATION EXECUTING
APPARATUS NOTIFIES VIDEO SIGNAL PROCESSING
APPARATUS AND OTHER RESPECTIVE INTERNAL APPARATUS
OF VARIOUS INFORMATION TO BE ENCODED
S2

VIDEO SIGNAL PROCESSING APPARATUS AND OTHER
RESPECTIVE INTERNAL APPARATUS ENCODE
CORRESPONDING DATA WITHIN CONTENT TO BE EDITED;
RESULTING SETS OF ENCODED DATA
ARE RESPECTIVELY STORED IN FILE SERVER
S3

MULTIPLEXER RESPECTIVELY MULTIPLEXES EACH SET
OF ENCODED DATA STORED IN THE FILE SERVER
TO GENERATE A MULTIPLEXED STREAM FILE;
SUPPLIES TO DOWNLOADER
S4

DOWNLOADER STORES MULTIPLEXED STREAM FILE
IN AT LEAST ONE OF DLT, HDD, AND NETWORK VIA WRITER
S5

END PROCESSING

# FIG. 3

PLANT AUTHORING APPARATUS ~30

COPY PROTECTION DATA

PRE-MASTERING ~31 → FORMATTER ~32 → CUTTING APPARATUS ~33 → ~34

DISC IMAGE DATA

ENCRYPTED DATA

EP 2 112 663 A2

# FIG. 4

```
┌──────────────────────────────┐
│   INITIATE PLANT AUTHORING   │
│     APPARATUS PROCESSING     │
└──────────────────────────────┘
              │
              ▼
┌──────────────────────────────┐
│   PREMASTERING APPARATUS      │  S11
│   ACQUIRES DISC IMAGE DATA    │
│   (MULTIPLEXED STREAM FILE)   │
└──────────────────────────────┘
              │
              ▼
┌────────────────────────────────────────────┐
│      PREMASTERING APPARATUS USES COPY        │  S12
│ PROTECTION GUARD TO ENCRYPT DISC IMAGE DATA; │
│ SUPPLIES RESULTING ENCRYPTED DATA TO FORMATTER│
└────────────────────────────────────────────┘
              │
              ▼
┌────────────────────────────────────────────┐
│      FORMATTER PERFORMS SIGNAL LEVEL         │  S13
│  CONVERSION AND VARIOUS OTHER PROCESSING     │
│      WITH RESPECT TO ENCRYPTED DATA;         │
│ SUPPLIES RESULTING SIGNAL TO CUTTING APPARATUS│
└────────────────────────────────────────────┘
              │                            S14
              ▼
┌────────────────────────────────────────────────────────┐
│         CUTTING APPARATUS CREATES MASTER DISC           │
│ (OPTICAL DISC MASTER HAVING DISC IMAGE DATA RECORDED THEREON)│
│      ON THE BASIS OF SIGNAL SUPPLIED FROM FORMATTER     │
└────────────────────────────────────────────────────────┘
              │
              ▼
      ┌──────────────────┐
      │  END PROCESSING  │
      └──────────────────┘
```

# FIG. 5

VIDEO DATA CAPTURE APPARATUS — 40

MASTER CONTROLLER — 41

GUI — 42

VTR CONTROL UNIT — 43

DATA CAPTURE CONTROL UNIT — 44

DIVISION POINT / PULLDOWN DETECTOR — 45

49

VIDEO DATA INPUT/OUTPUT INTERFACE — 46

47

VIDEO DATA SERVER — 48

AUXILIARY DATA SERVER — 50

EP 2 112 663 A2

# FIG. 6

DIVISION
PROCESSING
INTERVAL

SCENE CHANGE POINT
(DIVISION POINT CANDIDATE)

DIVISION POINT

EP 2 112 663 A2

# FIG. 7

A PATTERN     C PATTERN

B PATTERN     D PATTERN

EP 2 112 663 A2

# FIG. 8

AUTHORING APPLICATION EXECUTING APPARATUS ~18

19

VIDEO DATA SERVER 48

COMPRESSED DATA SERVER 70

VIDEO SIGNAL PROCESSING APPARATUS ~14

MASTER CONTROLLER 60

GUI ~61

ENCODING MANAGER ~62

WEIGHT CONTROL UNIT ~63

ENCODING CONTROL UNIT ~65

InfoDB

MULTI-PASS CONTROL UNIT ~64

DECODING CONTROL UNIT ~66

ENCODER ~67

~69

D1

D2

EP 2 112 663 A2

## FIG. 9

DISTRIBUTED VIDEO SIGNAL PROCESSING APPARATUS 14'

MASTER CONTROLLER 60'

ENCODING REMOTE CONTROL UNIT 65'

19

VIDEO DATA SERVER 48

COMPRESSED DATA SERVER 70

REMOTE ENCODER $67_1$

REMOTE ENCODER $67_2$

...

REMOTE ENCODER $67_n$

EP 2 112 663 A2

# FIG. 10

```
                    ( INITIATE )
                         │
                         ▼
              ┌──────────────────────┐  ┌S50
              │   INITIATE CAPTURE   │
              └──────────────────────┘
                         │
                         ▼
        ┌────────────────────────────────────────┐  ┌S51
        │ DETECT/RECORD DIVISION POINT CANDIDATES │
        └────────────────────────────────────────┘
                         │
                         ▼                    ┌S52
                ◇ 2:3 PULLDOWN DATA? ◇ ──────────────┐ NO
                         │ YES                        │
                         ▼                    ┌S53     │
          ┌──────────────────────────────┐           │
          │ DETECT/RECORD PULLDOWN PATTERNS│          │
          └──────────────────────────────┘           │
                         │◄──────────────────────────┘
                         ▼
              ┌──────────────────────┐  ┌S54
              │   WRITE VIDEO DATA   │
              └──────────────────────┘
                         │
                         ▼
          ┌──────────────────────────────┐  ┌S55
          │   INPUT ENCODING PARAMETERS  │
          └──────────────────────────────┘
                         │
                         ▼
    ┌──────────────────────────────────────────────┐  ┌S56
    │ DETERMINE NUMBER OF DIVISIONS AND DIVISION POINTS│
    └──────────────────────────────────────────────┘
                         │
                         ▼                    ┌S57
                ◇ 2:3 PULLDOWN DATA? ◇ ──────────────┐ YES
                         │ NO                         ▼
                         │              ┌──────────────────────┐  ┌S58
                         │              │   CULL COPIED FIELDS │
                         │              └──────────────────────┘
                         │◄──────────────────────────┘
                         ▼
      ┌────────────────────────────────────────────┐  ┌S59
      │ MEASURE DIFFICULTY; DETERMINE PICTURE TYPE  │
      └────────────────────────────────────────────┘
                         │
                         ▼
          ┌──────────────────────────────┐  ┌S60
          │   BIT ALLOCATION CALCULATION │
          └──────────────────────────────┘
                         │
                         ▼
              ┌──────────────────────┐  ┌S61
              │       ENCODE         │◄─────────────┐
              └──────────────────────┘              │
                         │                          │
                         ▼                    ┌S62  │
          ┌──────────────────────────────┐   ┌─────────────────────────┐ ┌S65
          │   CHECK IMAGE QUALITY        │   │   PARTIAL ENCODING      │
          └──────────────────────────────┘   └─────────────────────────┘
                         │                          ▲
                         │                    ┌S64  │
                         │                   ┌─────────────────────────┐
                         │                   │   MODIFY PARAMETERS     │
                         │                   └─────────────────────────┘
                         ▼     ┌S63                 ▲
                ◇ IMAGE QUALITY OK? ◇ ──────────────┘ NO
                         │ YES
                         ▼
              ┌──────────────────────┐  ┌S66
              │   POST-PROCESSING    │
              └──────────────────────┘
                         │
                         ▼
                     (  END  )
```

EP 2 112 663 A2

FIG. 11A

RAP(m)

RAP(m+1)

| | GOP(n) | GOP(n+1) | GOP(n+2) | GOP(n+3) | GOP(n+4) | |

FIG. 11B

DIVISION POINT
AND RAP(m)

RAP(m+2)    X(RAP(m+2))    RAP(m+4)    X(RAP(m+5))

DIVISION POINT
AND RAP(m+7)

RAP(m+1)

RE-ENCODE INTERVAL

RAP(m+6)

# FIG. 12

**FIG. 13A**

DIVISION POINT

DIVISION PROCESSING INTERVAL

**FIG. 13B**

P1: MODIFY INTERVAL
START POINT

P2: MODIFY INTERVAL
END POINT

VIDEO DATA CORRECTION
(MODIFY) INTERVAL

**FIG. 13C**

P3: RE-PROCESS
START POINT

P4: RE-PROCESS
END POINT

RE-ENCODE INTERVAL

# FIG. 14

EP 2 112 663 A2

**REFERENCES CITED IN THE DESCRIPTION**

**Patent documents cited in the description**

- JP 2000278042 A
- JP 2002326864 A
- JP 2001053570 A
- JP 2008111760 A